# EUROPEAN PATENT APPLICATION

(11) **EP 4 848 743 A1**
(43) Date of publication of application: **02.12.2026**
(21) Application number: 25778958.6
(22) Date of filing: 07.03.2025
(51) Int. Cl.: H04N 23/69, H04N 23/90, H04N 23/63, H04N 23/951, G06T 3/4007, G06T 3/4046, G06F 3/04845, G06F 3/04817, H04N 23/68

(54) **ELECTRONIC DEVICE COMPRISING PLURALITY OF CAMERAS, AND CONTROL METHOD THEREFOR**

(30) Priority: 26.03.2024 KR 20240041377; 11.09.2024 KR 20240123748
(71) Applicant: Samsung Electronics Co., Ltd., Suwon-si, Gyeonggi-do 16677 (KR)
(72) Inventor: LEE, Mujae, Suwon-si Gyeonggi-do 16677 (KR); OH, Yanggeun, Suwon-si Gyeonggi-do 16677 (KR); PARK, Jiyoon, Suwon-si Gyeonggi-do 16677 (KR); SON, Byungjun, Suwon-si Gyeonggi-do 16677 (KR); AHN, Sungjoo, Suwon-si Gyeonggi-do 16677 (KR); CHOI, Woojhon, Suwon-si Gyeonggi-do 16677 (KR)
(74) Representative: HGF
(86) International application number: PCT/KR2025/003032
(87) International publication number: WO 2025/206615

(57) **Abstract**

An electronic device is disclosed. The electronic device of the present disclosure comprises: a first camera; a second camera which is disposed to be adjacent to the first camera and which has an angle of view that is different from the angle of view of the first camera; a display; at least one processor including a processing circuit; and a memory for storing instructions, wherein, when executed individually or collectively by the at least one processor, the instructions can cause the electronic device to: acquire a first image of a first zoom magnification through the first camera; display at least a portion of the first image on the display; identify a target zoom magnification on the basis of a user input for changing zoom magnification; on the basis that the target zoom magnification deviates from a set range, generate an interpolation frame on the basis of the first image and at least a portion of a second image of a second zoom magnification acquired through the second camera; and display the interpolation frame on the display by replacing a region of the first image corresponding to the zoom magnification for some of the time for which the zoom magnification changes.

## Description

### [Technical Field]

The disclosure relates to an electronic device including a plurality of cameras and a control method thereof.

### [Background Art]

Various services and additional functions provided through an electronic device, e.g., a portable electronic device such as a smart phone, are gradually increasing. In order to increase the utility value of such electronic devices and satisfy the desires of various users, communication service providers or electronic device manufacturers are competitively developing electronic devices to provide various functions and to differentiate from other companies. Accordingly, various functions provided through an electronic device are gradually becoming more advanced.

An electronic device (e.g., a smart phone) may include a plurality of cameras. For example, the electronic device may include an ultra wide camera, a wide camera, and a telephoto camera, which have different basic zoom magnifications.

The plurality of cameras may have different focal lengths. The electronic device may obtain an image of a wider scene by using a camera having a shorter focal length (e.g., the ultra wide camera). On the other hand, the electronic device may obtain a higher quality image when capturing, using the telephoto camera, a subject located at a position farther from a location of the electronic device, as compared with capturing using the ultra wide camera or the wide camera.

The above-described information may be provided as related art for the purpose of helping understanding of the disclosure. No assertion or determination is raised as to whether any of the foregoing may be applicable as prior art in connection with the disclosure.

### [Detailed Description of the Invention]

### [Technical Solution]

According to an embodiment, an electronic device may include a first camera, a second camera disposed around the first camera and having a field of view (FOV) different from a FOV of the first camera, a display, at least one processor including processing circuitry, and memory storing instructions.

According to an embodiment, the instructions, when executed by the at least one processor individually or collectively, may cause the electronic device to obtain a first image of a first zoom magnification through the first camera.

According to an embodiment, the instructions, when executed by the at least one processor individually or collectively, may cause the electronic device to display at least a portion of the first image on the display.

According to an embodiment, the instructions, when executed by the at least one processor individually or collectively, may cause the electronic device to identify a target zoom magnification based on a user input to change a zoom magnification.

According to an embodiment, the instructions, when executed by the at least one processor individually or collectively, may cause the electronic device to, based on the target zoom magnification being outside a set range, generate an interpolation frame based on the first image and at least a portion of a second image of a second zoom magnification obtained through the second camera.

According to an embodiment, the instructions, when executed by the at least one processor individually or collectively, may cause the electronic device to, during at least part of a time when the zoom magnification is changing, display the interpolation frame on the display in replacement of a partial area of the first image corresponding to the zoom magnification.

According to an embodiment, a method of controlling an electronic device may include obtaining a first image of a first zoom magnification through a first camera of the electronic device.

According to an embodiment, the method of controlling the electronic device may include displaying at least a portion of the first image on a display of the electronic device.

According to an embodiment, the method of controlling the electronic device may include identifying a target zoom magnification based on a user input to change a zoom magnification.

According to an embodiment, the method of controlling the electronic device may include, based on the target zoom magnification being outside a set range, generating an interpolation frame based on the first image and at least a portion of a second image of a second zoom magnification obtained through a second camera which is disposed around the first camera and has a field of view (FOV) different from a FOV of the first camera.

According to an embodiment, the method of controlling the electronic device may include, during at least part of a time when the zoom magnification is changing, displaying the interpolation frame on the display in replacement of a partial area of the first image corresponding to the zoom magnification.

According to an embodiment, in a non-transitory computer-readable recording medium storing one or more programs, the one or more programs may include instructions that cause an electronic device to obtain a first image of a first zoom magnification through a first camera of the electronic device.

According to an embodiment, the one or more programs may include instructions that cause the electronic device to display at least a portion of the first image on a display of the electronic device.

According to an embodiment, the one or more programs may include instructions that cause the electronic device to identify a target zoom magnification based on a user input to change a zoom magnification.

According to an embodiment, the one or more programs may include instructions that cause the electronic device to, based on the target zoom magnification being outside a set range, generate an interpolation frame based on the first image and at least a portion of a second image of a second zoom magnification obtained through a second camera which is disposed around the first camera and has a field of view (FOV) different from a FOV of the first camera.

According to an embodiment, the one or more programs may include instructions that cause the electronic device to, during at least part of a time when the zoom magnification is changing, display the interpolation frame on the display in replacement of a partial area of the first image corresponding to the zoom magnification.

### [Brief Description of Drawings]

FIG. 1 is a block diagram illustrating an electronic device in a network environment according to an embodiment.
FIG. 2 is a block diagram illustrating a camera module, according to various embodiments.
FIG. 3 is a flowchart describing an operation of displaying an interpolation frame when a camera that obtains an image displayed on a display changes according to a target zoom magnification, in an electronic device according to an embodiment.
FIG. 4A is a view illustrating an operation of displaying an interpolation frame when a camera that obtains an image displayed on a display changes according to a target zoom magnification, in an electronic device according to an embodiment.
FIG. 4B is a view illustrating an operation of generating an interpolation frame, in an electronic device according to an embodiment.
FIG. 5A is a view illustrating a user input to change a zoom magnification of an electronic device according to an embodiment.
FIG. 5B is a view illustrating a user input to change a zoom magnification of an electronic device according to an embodiment.
FIG. 5C is a view illustrating a user input to change a zoom magnification of an electronic device according to an embodiment.
FIG. 6 is a view illustrating an operation of cropping images respectively obtained from a plurality of cameras before generating an interpolation frame, in an electronic device according to an embodiment.
FIG. 7 is a view illustrating an operation of scaling the cropped images of FIG. 6 to a same size before generating an interpolation frame, in an electronic device according to an embodiment.
FIG. 8 is a view illustrating an operation of obtaining disparity data and ratio data based on the scaled images of FIG. 7 by using an artificial intelligence model, in an electronic device according to an embodiment.
FIG. 9 is a view illustrating an operation of obtaining disparity data and ratio data using a plurality of artificial intelligence models configured in a joint form, in an electronic device according to an embodiment.
FIG. 10 is a view illustrating an operation of generating an interpolation frame using disparity data, in an electronic device according to an embodiment.
FIG. 11 is a view illustrating images displayed on a display, in an electronic device according to an embodiment.
FIG. 12 is a view illustrating an operation of generating an interpolation frame using disparity data and ratio data, in an electronic device according to an embodiment.
FIG. 13 is a flowchart describing an operation of displaying an interpolation frame according to a target zoom magnification, in an electronic device according to an embodiment.
FIG. 14 is a flowchart describing an operation of determining a zoom curve according to a target zoom magnification, in an electronic device according to an embodiment.
FIG. 15 is a view illustrating an operation of displaying interpolation frames with disparity compensated, in an electronic device according to an embodiment.
FIG. 16 is a view illustrating an operation of displaying an interpolation frame with exposure corrected, in an electronic device according to an embodiment.

### [Mode for Carrying out the Invention]

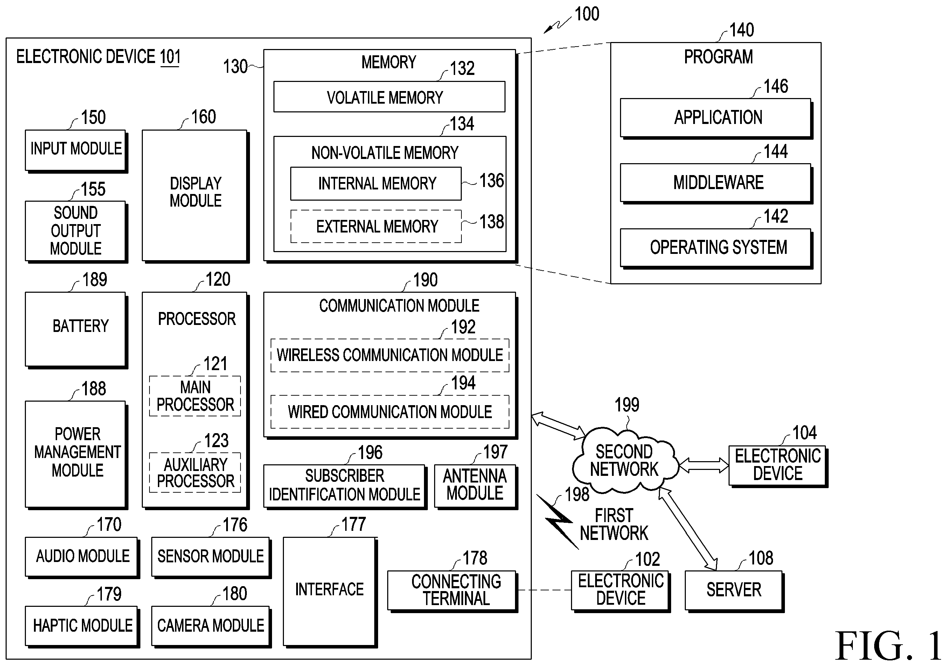

FIG. 1 is a block diagram illustrating an electronic device 101 in a network environment 100 according to an embodiment. Referring to FIG. 1, in the network environment 100, the electronic device 101 may communicate with an electronic device 102 through a first network 198 (e.g., a short-range wireless communication network), or may communicate with at least one of an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In some embodiments, in the electronic device 101, at least one of these components (e.g., the connecting terminal 178) may be omitted, or one or more other components may be added. In some embodiments, some of these components (e.g., the sensor module 176, the camera module 180, or the antenna module 197) may be integrated into a single component (e.g., the display module 160).

The processor 120 may, for example, execute software (e.g., the program 140) to control at least one other component (e.g., a hardware or software component) of the electronic device 101 connected to the processor 120, and may perform various data processing or computations. According to an embodiment, as at least part of the data processing or computation, the processor 120 may store instructions or data received from another component (e.g., the sensor module 176 or the communication module 190) in volatile memory 132, process the instructions or data stored in the volatile memory 132, and store result data in non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of, or together with, the main processor 121. For example, when the electronic device 101 includes the main processor 121 and the auxiliary processor 123, the auxiliary processor 123 may be configured to use less power than the main processor 121 or to be specialized for a specified function. The auxiliary processor 123 may be implemented separately from, or as a part of, the main processor 121.

The auxiliary processor 123 may, for example, control at least some of functions or states related to at least one component (e.g., the display module 160, the sensor module 176, or the communication module 190) among the components of the electronic device 101 in place of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., the image signal processor or the communication processor) may be implemented as a part of another functionally related component (e.g., the camera module 180 or the communication module 190). According to an embodiment, the auxiliary processor 123 (e.g., the neural processing unit) may include a hardware structure specialized for processing an artificial intelligence model. The artificial intelligence model may be generated through machine learning. Such learning may, for example, be performed by the electronic device 101 itself in which the artificial intelligence model is performed, or may be performed through a separate server (e.g., the server 108). The learning algorithm may include, for example, supervised learning, unsupervised learning, semi-supervised learning, or reinforcement learning, but is not limited to the aforementioned examples. The artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-networks, or a combination of two or more of the foregoing, but is not limited to the aforementioned examples. The artificial intelligence model may, additionally or alternatively, include a software structure in addition to the hardware structure.

The memory 130 may store various data used by at least one component (e.g., the processor 120 or the sensor module 176) of the electronic device 101. The data may include, for example, software (e.g., the program 140), and input data or output data for instructions related thereto. The memory 130 may include the volatile memory 132 or the non-volatile memory 134.

The program 140 may be stored as software in the memory 130, and may include, for example, an operating system 142, middleware 144, or an application 146.

The input module 150 may receive instructions or data to be used by a component (e.g., the processor 120) of the electronic device 101 from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as multimedia playback or recording playback. The receiver may be used to receive an incoming call. According to an embodiment, the receiver may be implemented separately from, or as a part of, the speaker.

The display module 160 may visually provide information to the outside (e.g., a user) of the electronic device 101. The display module 160 may include, for example, a display, a hologram device, or a projector, and a control circuit for controlling the corresponding device. According to an embodiment, the display module 160 may include a touch sensor configured to sense a touch, or a pressure sensor configured to measure the intensity of a force generated by the touch.

The audio module 170 may convert sound into an electrical signal, or vice versa, i.e., may convert an electrical signal into sound. According to an embodiment, the audio module 170 may acquire sound through the input module 150, or may output sound through the sound output module 155 or an external electronic device (e.g., the electronic device 102) (e.g., a speaker or headphones) connected directly or wirelessly to the electronic device 101.

The sensor module 176 may sense an operating state (e.g., power or temperature) of the electronic device 101 or an external environmental state (e.g., a user state), and may generate an electrical signal or data value corresponding to the sensed state. According to an embodiment, the sensor module 176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be connected directly or wirelessly to an external electronic device (e.g., the electronic device 102). According to an embodiment, the interface 177 may include, for example, a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile or kinesthetic sense. According to an embodiment, the haptic module 179 may include, for example, a motor, a piezoelectric element, or an electrical stimulation device.

The camera module 180 may capture still images and videos. According to an embodiment, the camera module 180 may include one or more lenses, image sensors, image signal processors, or flashes.

The power management module 188 may manage power supplied to the electronic device 101. According to an embodiment, the power management module 188 may be implemented, for example, as at least a part of a power management integrated circuit (PMIC).

The battery 189 may supply power to at least one component of the electronic device 101. According to an embodiment, the battery 189 may include, for example, a non-rechargeable primary battery, a rechargeable secondary battery, or a fuel cell.

The communication module 190 may support establishment of a direct (e.g., wired) communication channel or a wireless communication channel between the electronic device 101 and an external electronic device (e.g., the electronic device 102, the electronic device 104, or the server 108), and performance of communication through the established communication channel. The communication module 190 may include one or more communication processors that operate independently of the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication module). A corresponding communication module among these communication modules may communicate with an external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., LAN or WAN)). These various types of communication modules may be integrated into one component (e.g., a single chip), or may be implemented as a plurality of components (e.g., multiple chips) separate from each other. The wireless communication module 192 may identify or authenticate the electronic device 101 within a communication network, such as the first network 198 or the second network 199, by using subscriber information (e.g., an international mobile subscriber identifier (IMSI)) stored in the subscriber identification module 196.

The wireless communication module 192 may support a 5G network beyond a 4G network, and a next-generation communication technology, for example, a new radio access technology (NR). The NR access technology may support high-speed transmission of high-capacity data (enhanced mobile broadband (eMBB)), terminal power minimization and access of a plurality of terminals (massive machine-type communications (mMTC)), or high reliability and low latency (ultra-reliable and low-latency communications (URLLC)). The wireless communication module 192 may, for example, support a high-frequency band (e.g., an mmWave band) to achieve a high data transmission rate. The wireless communication module 192 may support various technologies for securing performance in the high-frequency band, for example, beamforming, massive multiple-input and multiple-output (MIMO), full-dimensional MIMO (FD-MIMO), an array antenna, analog beamforming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for realizing eMBB, a loss coverage (e.g., 164 dB or less) for realizing mMTC, or a U-plane latency (e.g., 0.5 ms or less for each of downlink (DL) and uplink (UL), or a round trip of 1 ms or less) for realizing URLLC.

The antenna module 197 may transmit a signal or power to the outside (e.g., an external electronic device) or receive it from the outside. According to an embodiment, the antenna module 197 may include an antenna including a radiator made of a conductor or a conductive pattern formed on a substrate (e.g., a PCB). According to an embodiment, the antenna module 197 may include a plurality of antennas (e.g., an array antenna). In such a case, at least one antenna suitable for a communication scheme used in a communication network, such as the first network 198 or the second network 199, may be selected from the plurality of antennas, for example, by the communication module 190. A signal or power may be transmitted or received between the communication module 190 and an external electronic device through the at least one selected antenna. According to some embodiments, in addition to the radiator, another component (e.g., a radio frequency integrated circuit (RFIC)) may additionally be formed as a part of the antenna module 197.

According to an embodiment, the antenna module 197 may form an mmWave antenna module. According to an embodiment, the mmWave antenna module may include a printed circuit board, an RFIC disposed on or adjacent to a first surface (e.g., a lower surface) of the printed circuit board and capable of supporting a specified high-frequency band (e.g., an mmWave band), and a plurality of antennas (e.g., an array antenna) disposed on or adjacent to a second surface (e.g., an upper surface or a side surface) of the printed circuit board and capable of transmitting or receiving signals of the specified high-frequency band.

At least some of the components may be connected to each other through a peripheral device communication scheme (e.g., a bus, general purpose input and output (GPIO), serial peripheral interface (SPI), or mobile industry processor interface (MIPI)) and may exchange signals (e.g., commands or data) with each other.

According to an embodiment, the commands or data may be transmitted or received between the electronic device 101 and the external electronic device 104 through the server 108 connected to the second network 199. Each of the external electronic devices 102 or 104 may be a device of the same type as, or a different type from, the electronic device 101. According to an embodiment, all or some of the operations executed in the electronic device 101 may be executed in one or more external electronic devices among the external electronic devices 102, 104, or 108. For example, when the electronic device 101 needs to perform a certain function or service automatically, or in response to a request from a user or another device, the electronic device 101 may, instead of, or in addition to, executing the function or service by itself, request one or more external electronic devices to perform at least a part of the function or service. The one or more external electronic devices that have received the request may execute at least a part of the requested function or service, or an additional function or service related to the request, and may transfer a result of the execution to the electronic device 101. The electronic device 101 may provide the result, as it is or after additional processing, as at least a part of a response to the request. For this purpose, for example, cloud computing, distributed computing, mobile edge computing (MEC), or client-server computing technology may be used. The electronic device 101 may, for example, provide ultra-low-latency services using distributed computing or mobile edge computing. In an embodiment, the external electronic device 104 may include an Internet of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

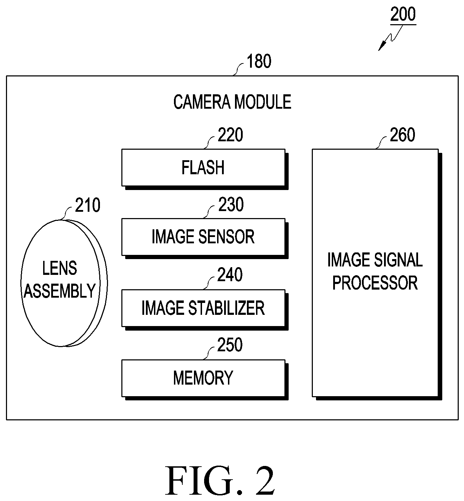

FIG. 2 is a block diagram 200 illustrating the camera module 180, according to various embodiments.

Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted from a subject that is an object of image capturing. The lens assembly 210 may include one or more lenses. According to an embodiment, the camera module 180 may include a plurality of lens assemblies 210. In this case, the camera module 180 may form, e.g., a dual camera, a 360-degree camera, or a spherical camera. Some of the plurality of lens assemblies 210 may have the same lens attributes (e.g., FOV, focal length, auto focus, f number, or optical zoom), or at least one lens assembly may have one or more lens attributes different from those of another lens assembly. The lens assembly 210 may include, e.g., a wide-angle lens or a telephoto lens.

The flash 220 may emit light that is used to reinforce light emitted or reflected from a subject. According to an embodiment, the flash 220 may include one or more light emitting diodes (e.g., a red-green-blue (RGB) LED, a white LED, an infrared LED, or an ultraviolet LED), or a xenon lamp. The image sensor 230 may obtain an image corresponding to a subject by converting light emitted or reflected from the subject and transmitted through the lens assembly 210 into an electrical signal. According to an embodiment, the image sensor 230 may include, e.g., one image sensor selected from image sensors having different attributes, such as an RGB sensor, a black and white (BW) sensor, an IR sensor, or a UV sensor, a plurality of image sensors having the same attribute, or a plurality of image sensors having different attributes. Each image sensor included in the image sensor 230 may be implemented using, e.g., a charged coupled device (CCD) sensor or a complementary metal oxide semiconductor (CMOS) sensor.

The image stabilizer 240 may move at least one lens included in the lens assembly 210 or the image sensor 230 in a particular direction, or may control an operating attribute of the image sensor 230 (e.g., adjust read-out timing, etc.), in response to a movement of the camera module 180 or the electronic device 101 including the same. This allows for compensating at least in part for a negative effect of the movement on an image being captured. According to an embodiment, the image stabilizer 240 may detect such a movement of the camera module 180 or the electronic device 101 using a gyro sensor (not shown) or an acceleration sensor (not shown) disposed inside or outside the camera module 180. According to an embodiment, the image stabilizer 240 may be implemented, e.g., as an optical image stabilizer. The memory 250 may store, at least temporarily, at least a portion of an image obtained through the image sensor 230 for a subsequent image processing task. For example, if image acquisition according to a shutter is delayed, or a plurality of images are acquired at high speed, an obtained original image (e.g., a Bayer-patterned image or a high-resolution image) may be stored in the memory 250, and its corresponding copy image (e.g., a low-resolution image) may be previewed through the display module 160. Thereafter, if a designated condition is satisfied (e.g., a user input or a system command), at least a portion of the original image stored in the memory 250 may be acquired and processed, e.g., by the image signal processor 260. According to an embodiment, the memory 250 may be configured as at least a portion of the memory 130, or as a separate memory that is operated independently thereof.

The image signal processor 260 may perform one or more image processing with respect to an image obtained through the image sensor 230 or an image stored in the memory 250. The one or more image processing operations may include, e.g., depth map generation, three-dimensional modeling, panorama generation, feature point extraction, image synthesis, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of components included in the camera module 180. An image processed by the image signal processor 260 may be stored back in the memory 250 for further processing, or provided to an external component of the camera module 180 (e.g., the memory 130, the display module 160, the electronic device 102, the electronic device 104, or the server 108). According to an embodiment, the image signal processor 260 may be configured as at least a portion of the processor 120, or as a separate processor that is operated independently of the processor 120. If the image signal processor 260 is configured as a separate processor from the processor 120, at least one image processed by the image signal processor 260 may be displayed through the display module 160 by the processor 120, as it is or after being further processed.

According to an embodiment, the electronic device 101 may include a plurality of camera modules 180 each having a different attribute or function. In this case, e.g., at least one of the plurality of camera modules 180 may be a wide-angle camera and at least another may be a telephoto camera. Similarly, at least one of the plurality of camera modules 180 may be a front camera and at least another may be a rear camera.

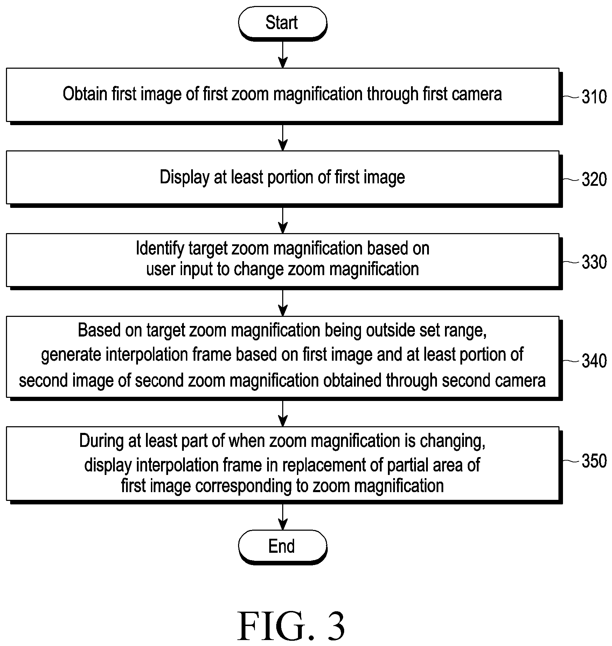

FIG. 3 is a flowchart describing an operation of displaying an interpolation frame when a camera that obtains an image displayed on a display changes according to a target zoom magnification, in an electronic device according to an embodiment.

Referring to FIG. 3, in operation 310, an electronic device (e.g., the electronic device 101 of FIG. 1 or the processor 120 of FIG. 1) may obtain a first image of a first zoom magnification through a first camera (e.g., the camera module 180 of FIG. 1 or the camera module 180 of FIG. 2).

According to an embodiment, the electronic device may obtain a second image of a second zoom magnification through a second camera (e.g., the camera module 180 of FIG. 1 or the camera module 180 of FIG. 2). According to an embodiment, the first camera and the second camera may have different FOVs and may have different optical zoom magnifications. For example, the first camera may have an optical zoom magnification of a first value (e.g., 1x), and the second camera may have an optical zoom magnification of a second value (e.g., 3x). According to an embodiment, the first camera may obtain, through digital zoom, an image corresponding to a zoom magnification in a first range (e.g., 1x or more and less than 3x), and the second camera may obtain, through digital zoom, an image corresponding to a zoom magnification in a second range (e.g., 3x or more and less than 10x).

According to an embodiment, the first camera and the second camera may be disposed on one surface (e.g., a front surface or a rear surface) of the electronic device. For example, the second camera may be disposed around the first camera.

According to an embodiment, when a user input to execute a camera application is received, the electronic device may activate two cameras among the plurality of cameras. For example, when a user input to execute a camera application is received, the electronic device may activate, among the plurality of cameras included in the electronic device, the first camera having an optical zoom magnification corresponding to a current zoom magnification (e.g., a last used zoom magnification) or a default zoom magnification, and the second camera having an optical zoom magnification with the smallest difference from the optical zoom magnification of the first camera.

According to an embodiment, when a user input to execute a camera application is received, the electronic device may activate, among the plurality of cameras included in the electronic device, the first camera having an optical zoom magnification corresponding to a current zoom magnification (e.g., a last used zoom magnification) or a default zoom magnification. According to an embodiment, when a user input to change a zoom magnification (e.g., zoom magnification change through a physical button manipulation, zoom magnification change through a plurality of buttons or a slide bar displayed overlapping on a preview screen, zoom magnification change through a touch input (e.g., a pinch input) on a display, zoom magnification change through an air gesture, zoom magnification change through a button of an external electronic device such as an electronic pen, or a voice input for zoom magnification change) is received, the second camera may be activated. For example, when a touch for zoom magnification change is received through an execution screen of a camera application, or a multi-touch for a pinch input is input, the electronic device may activate the second camera. According to an embodiment, the second camera may be a camera for obtaining an image of a target zoom magnification identified based on a user input to change a zoom magnification.

According to an embodiment, when a zoom magnification changed based on a user input to change a zoom magnification is within a set range, the electronic device may activate the second camera. According to an embodiment, the set range of the zoom magnification at which the second camera is activated is a value (e.g., 2.5x or more and less than 3x) between the current zoom magnification and the digital zoom magnification (e.g., 3x) of the first camera, and an image may be obtained through the first camera.

According to an embodiment, the electronic device may activate at least two or more of the plurality of cameras regardless of the execution of the camera application.

According to an embodiment, in a state where both the first camera and the second camera are activated, the electronic device may obtain a first image of a first zoom magnification (e.g., 1x) through the first camera, and obtain a second image of a second zoom magnification (e.g., 3x) through the second camera.

According to an embodiment, in operation 320, the electronic device may display at least a portion of the first image. According to an embodiment, when a current zoom magnification is within a first range (e.g., 1x or more and less than 3x), the electronic device may display a portion of the first image obtained through the first camera. For example, the electronic device may crop a partial area of the first image to be displayed on a display (e.g., the display 160 of FIG. 1) based on the current zoom magnification, and may scale the cropped area to fit a size of the display and display it on the display.

According to an embodiment, along with the acquisition of the first image through the first camera, the second image obtained through the second camera may be stored in memory (e.g., the memory 130 of FIG. 1).

According to an embodiment, in operation 330, the electronic device may identify a target zoom magnification based on a user input to change a zoom magnification.

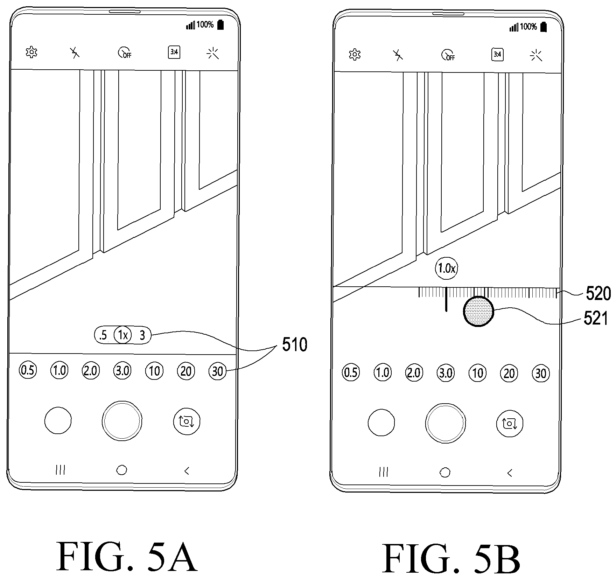

According to an embodiment, the electronic device may display, on the display, a plurality of icons (or buttons) respectively corresponding to a plurality of zoom magnifications (e.g., 0.5x, 1x, 2x, 3x, 5x, 10x). According to an embodiment, based on receiving a user input for selecting one of the plurality of icons, the electronic device may identify a zoom magnification corresponding to the selected icon as the target zoom magnification. According to an embodiment, an embodiment in which the plurality of icons are displayed will be described below with reference to FIG. 5A.

According to an embodiment, the electronic device may display, on the display, a slide bar capable of changing a zoom magnification. According to an embodiment, based on receiving a user input for selecting or dragging a specific position of the slide bar, the electronic device may identify the target zoom magnification. According to an embodiment, an embodiment in which the slide bar is displayed will be described below with reference to FIG. 5B.

According to an embodiment, based on receiving a user input, which is a pinch input, the electronic device may identify a zoom magnification corresponding to a distance between a start point and an end point of the pinch input as the target zoom magnification. For example, when a pinch input for zoom magnification change is received through a preview screen of an execution screen of a camera application, the electronic device may identify the target zoom magnification based on a change amount between a distance between two fingers when the pinch input starts and a distance between the two fingers when the pinch input ends.

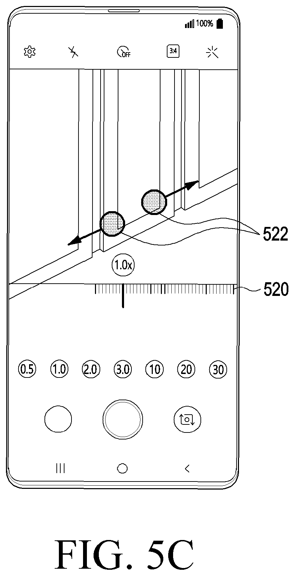

According to an embodiment, based on receiving a user input, which is a pinch input, the electronic device may identify a zoom magnification corresponding to a speed of the pinch input as the target zoom magnification. For example, when a pinch input for zoom magnification change is received through a preview screen of an execution screen of a camera application, the electronic device may identify a speed of the pinch input based on a distance between two fingers when the pinch input starts, a change amount of the distance between the two fingers when the pinch input ends, and a time required for the pinch input, and identify the target zoom magnification based on the speed of the pinch input. According to an embodiment, an embodiment of determining the target zoom magnification through a pinch input will be described below with reference to FIG. 5C.

According to an embodiment, the end of the pinch input may be a case in which touches of two fingers are released, or a case in which two touch positions are maintained for a set time even if the touches are not released. According to an embodiment, when a touch position of the finger is changed after the pinch input ends without the touches of two fingers being released, the electronic device may identify that a new pinch input has been received. As such, by receiving a plurality of pinch inputs while maintaining the touch, the electronic device may provide an experience like a continuous pinch input.

According to an embodiment, the change of the zoom magnification may be an enlargement change (e.g., zoom in) or a reduction change (e.g., zoom out). For example, the enlargement change may be a zoom magnification change corresponding to selecting an icon corresponding to a zoom magnification greater than the current zoom magnification, or to a pinch input in which the distance between two fingers becomes farther. According to an embodiment, the reduction change may be a zoom magnification change corresponding to selecting an icon corresponding to a zoom magnification smaller than the current zoom magnification, or to a pinch input in which the distance between two fingers becomes narrower.

According to an embodiment, in operation 340, based on the target zoom magnification being outside a set range (e.g., a zoom magnification in the first range obtainable by the first camera (e.g., 1x or more and less than 3x)), the electronic device may generate an interpolation frame based on the first image and at least a portion of the second image of the second zoom magnification obtained through the second camera.

According to an embodiment, based on the target zoom magnification being outside the set range, the electronic device may input a first input image obtained based on the first image and a second input image obtained based on the second image, as input data, to an artificial intelligence model, and obtain, as output data of the artificial intelligence model, first disparity data for each pixel of the first input image with respect to the second input image, second disparity data for each pixel of the second input image with respect to the first input image, and ratio data.

According to an embodiment, when the target zoom magnification is outside the first range obtainable by the first camera, the electronic device may identify that a camera that obtains an image to be displayed on the display when the target zoom magnification is applied is changed. For example, when the target zoom magnification is outside the set range, the electronic device may identify that, currently while the zoom magnification is within the set range, at least a portion of the first image obtained by the first camera is displayed, and at the target zoom magnification, at least a portion of the second image obtained by the second camera is displayed.

According to an embodiment, when identifying that the camera that obtains the image to be displayed on the display when the target zoom magnification is applied is changed, the electronic device may identify that interpolation frames are to be displayed in the operation of changing the zoom magnification to the target zoom magnification. According to an embodiment, the interpolation frames may respectively correspond to intermediate zoom magnifications in the zoom magnification change operation.

According to an embodiment, to generate the interpolation frame, the electronic device may obtain disparity data based on the first image and the second image, and ratio data at which the first image and the second image are to be applied for generating the interpolation frame.

According to an embodiment, the electronic device may preprocess the first image and the second image to obtain the first input image and the second input image, in order to obtain the disparity data and the ratio data.

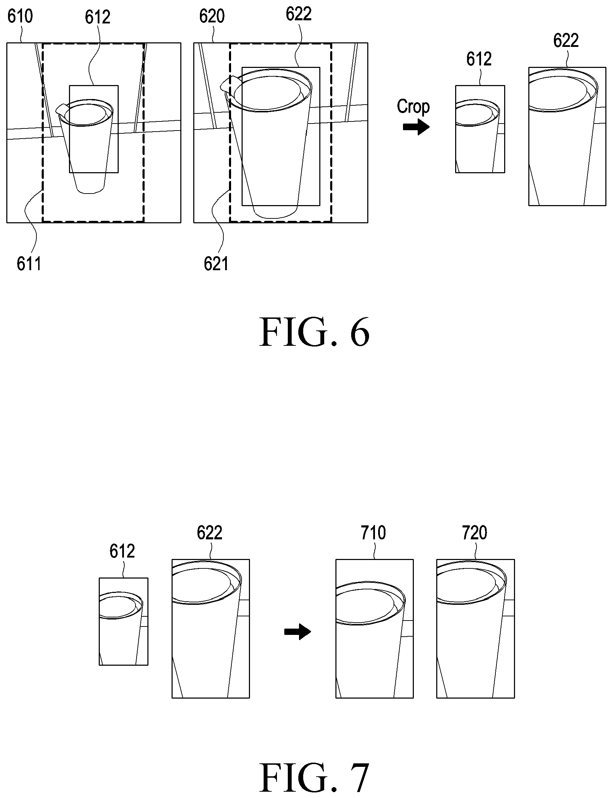

According to an embodiment, the first input image and the second input image may be obtained by cropping a first area that matches the second image in the first image and a second area that matches the first image in the second image, and resizing the first area and the second area so that a size of the first area corresponds to a size of the second area. According to an embodiment, an operation of obtaining the first input image and the second input image will be described in more detail below with reference to FIGS. 6 and 7.

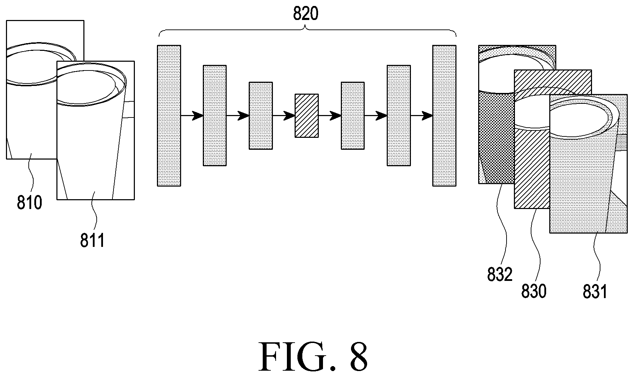

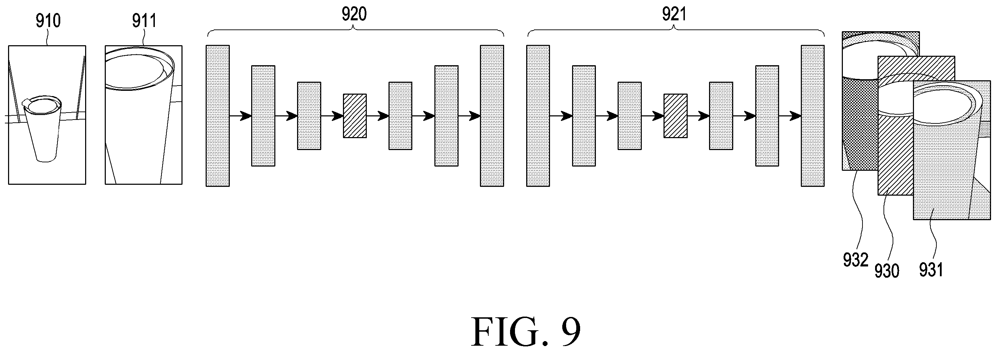

According to an embodiment, the artificial intelligence model (e.g., the artificial intelligence model 820 of FIG. 8 or the second artificial intelligence model 921 of FIG. 9) may be trained to use a plurality of input images as input data and obtain, as output data, a plurality of disparity data with respect to each other of the plurality of input images and data related to a ratio at which pixels of each of the plurality of input images are to be applied.

According to an embodiment, the disparity data (e.g., an optical flow) is generated due to different placement positions of two cameras, and may be data related to a difference in a position (e.g., pixel coordinates) within an image of a same object respectively included in the first input image and the second input image. According to an embodiment, the disparity data may include data related to per-pixel movement information between the input images (e.g., the first input image, the second input image). For example, through the artificial intelligence model, the electronic device may include the first disparity data including per-pixel motion information when the position of the object in the first input image moves to the position of the object in the second input image, and the second disparity data including per-pixel motion information when the position of the object in the second input image moves to the position of the object in the first input image.

According to an embodiment, the ratio data (e.g., an occlusion mask) may be related to a ratio at which a pixel value of the first input image is to be applied and a ratio at which a pixel value of the second input image is to be applied, for each pixel. For example, when the ratio data of a specific pixel (x, y) is 0, it is a part included in the first input image but not included in the second input image, and only the pixel value of (x, y) of the first input image will be applied when the interpolation frame is generated. According to an embodiment, when the ratio data of a specific pixel (x, y) is 0.5, an average value of the pixel value of (x, y) of the first input image and the pixel value of (x, y) of the second input image may be applied when the interpolation frame is generated.

According to an embodiment, the electronic device may also obtain the first input image and the second input image through an artificial intelligence model (e.g., the first artificial intelligence model 920 of FIG. 9) stored in the memory. According to an embodiment, the artificial intelligence model for obtaining the input images may be separate from the artificial intelligence model for obtaining the plurality of disparity data and the data related to a ratio at which pixels of each of the plurality of input images are to be applied. According to an embodiment, the artificial intelligence model for obtaining the input images may be trained to use a plurality of images as input data and obtain, as output data, respective matched areas among the plurality of images, resized to have a same size.

According to an embodiment, the electronic device may use the first image and the second image as input data of the first artificial intelligence model, and obtain the first input image and the second input image as output data. As such, when the first input image and the second input image are obtained through the artificial intelligence model, the electronic device may configure two artificial intelligence models in a joint form to obtain the disparity data and the ratio data. According to an embodiment, an operation of obtaining the disparity data and the ratio data through two artificial intelligence models configured in a joint form will be described in more detail below with reference to FIG. 9.

According to an embodiment, the electronic device may generate the interpolation frame based on the first input image, the first disparity data, the second input image, the second disparity data, and the ratio data.

According to an embodiment, the electronic device may determine intermediate zoom magnifications of a set number between the first zoom magnification and the second zoom magnification. According to an embodiment, a difference between adjacent intermediate zoom magnifications may be constant. For example, when the zoom magnification is changed from 1x to 3x, the intermediate zoom magnifications may be 1.25, 1.5, 1.75, 2, 2.25, 2.5, and 2.75. According to an embodiment, when the zoom magnification is changed from 3x to 1x, the intermediate zoom magnifications may be 2.75, 2.5, 2.25, 2, 1.75, 1.5, and 1.25.

According to an embodiment, the electronic device may generate first input images of the set number and second input images of the set number. According to an embodiment, the first input images may respectively correspond to the intermediate zoom magnifications of the set number, and the second input images may respectively correspond to the intermediate zoom magnifications of the set number.

According to an embodiment, the electronic device may generate interpolation frames of the set number respectively corresponding to the intermediate zoom magnifications of the set number. For example, the electronic device may generate the interpolation frames of the set number respectively corresponding to the intermediate zoom magnifications of the set number by respectively using the first input images of the set number and the second input images of the set number. According to an embodiment, the number of interpolation frames may be equal to or greater than a set minimum number (e.g., three).

According to an embodiment, the electronic device may determine the set number based on a time required to change from the first magnification to the target zoom magnification. For example, when the time required to change from the first magnification to the target zoom magnification is long, the number of intermediate zoom magnifications may be increased to naturally display a screen that is enlarged or reduced by the zoom change.

According to an embodiment, the electronic device may determine the number of intermediate zoom magnifications based on a difference between the first magnification and the target zoom magnification. For example, when the difference between the first magnification and the target zoom magnification is large (e.g., the magnification difference is 3 or more), the number of intermediate zoom magnifications may be increased to naturally display a screen that is enlarged or reduced by the zoom change.

According to an embodiment, the number of intermediate zoom magnifications may be determined based on a type of a camera activated according to the target zoom magnification. For example, in a state where a 1x camera is activated because the first magnification is 1x, the number of intermediate zoom magnifications when the camera activated based on the target zoom magnification is a 10x camera may be greater than the number of intermediate zoom magnifications when the activated camera is a 3x camera.

According to an embodiment, when the electronic device is a visual see through (VST), virtual reality (VR), or augmented reality (AR) device, such as a head mounted display (HMD) device, more cameras may be mounted than a smartphone, and a placement interval between the cameras may be far. The farther the placement interval between the cameras, the greater the disruption phenomenon that may occur upon camera switching due to disparity, so the number of intermediate zoom magnifications may be increased for a natural switching.

According to an embodiment, the electronic device may generate the interpolation frame based on a plurality of zoom curves stored in the memory. The zoom curve may be related to a timing (e.g., a disparity estimation time point or a synthesis timing) at which the intermediate zoom magnifications are applied. For example, when the zoom curve is linear, a screen to which the intermediate zoom magnification is applied may be displayed at regular time intervals, so that the zoom change may appear to be performed at a constant speed. According to an embodiment, when the zoom curve is nonlinear, the zoom change may appear to be performed at a fast speed in a section where the slope of the zoom curve is large, and the zoom change may appear to be performed at a slow speed in a section where the slope of the zoom curve is small.

According to an embodiment, the electronic device may identify one zoom curve among the plurality of zoom curves based on a difference between the first zoom magnification and the target zoom magnification. For example, when the difference between the first zoom magnification and the target zoom magnification is large, a nonlinear zoom curve including a section with a large slope may be selected.

According to an embodiment, the electronic device may store zoom curves mapped by differences between the first zoom magnification and the target zoom magnification. According to an embodiment, the electronic device may select a zoom curve corresponding to the difference between the first zoom magnification and the target zoom magnification.

According to an embodiment, based on the identified zoom curve, the electronic device may determine respective disparities to which the set number of intermediate zoom magnifications are applied. For example, when the zoom curve is linear, a difference between the disparities to which the intermediate zoom magnifications are applied may be a constant value. According to an embodiment, when the zoom curve is nonlinear, the difference between the disparities to which the intermediate zoom magnifications are applied may be large in a section where the slope of the zoom curve is large, and the difference between the disparities to which the intermediate zoom magnifications are applied may be small in a section where the slope of the zoom curve is small.

According to an embodiment, when a high refresh rate (or frame rate (frames per second, FPS)) is required, such as in a VST, VR, or AR device, the electronic device may determine the number and/or timing of the intermediate zoom magnifications based on the refresh rate (or frame rate).

According to an embodiment, in operation 350, during at least a part of when the zoom magnification is changing, the electronic device may display the interpolation frame in replacement of a partial area of the first image corresponding to the zoom magnification.

According to an embodiment, while changing from the first zoom magnification to a set zoom magnification between the first zoom magnification and the second zoom magnification, the electronic device may display a partial area of the first image corresponding to a current zoom magnification. According to an embodiment, while changing from the set zoom magnification to the second zoom magnification, the electronic device may sequentially display the interpolation frames of the set number in replacement of a partial area of the first image. For example, after the zoom magnification is changed, up to a specific magnification, the electronic device may crop and scale a portion of the first image obtained from the first camera through digital zoom and display it, and from the specific magnification until before the second zoom magnification, the electronic device may display interpolation frames instead of the first image. According to an embodiment, from the second zoom magnification, at least a portion of the second image obtained from the second camera may be displayed.

According to an embodiment, while changing from the first zoom magnification to the second zoom magnification, the electronic device may sequentially display the interpolation frames of the set number in replacement of at least a portion of the first image. For example, from when the zoom magnification change starts until before the second zoom magnification, the electronic device may display the interpolation frames instead of the first image obtained from the first camera. According to an embodiment, from the second zoom magnification, at least a portion of the second image obtained from the second camera may be displayed.

As such, even when the camera that obtains the image displayed on the display is changed according to the zoom magnification change, by displaying the interpolation frame in the zoom magnification change operation, the camera change may be naturally performed without a sense of heterogeneity.

According to an embodiment, even in a flex zoom function that automatically recognizes a person, background, and object in a preview during image capturing to automatically determine a zoom magnification, the electronic device may identify the automatically determined zoom magnification as the target zoom magnification, and if camera switching is required based on the current zoom magnification and the target zoom magnification, generate and display interpolation frames based on images obtained by the two cameras.

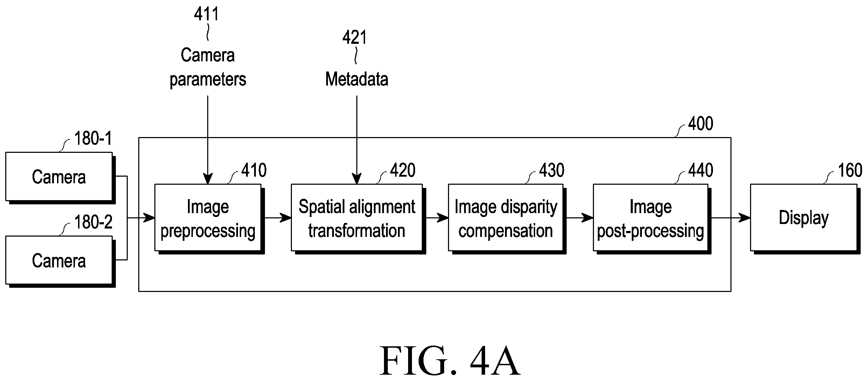

FIG. 4A is a view illustrating an operation of displaying an interpolation frame when a camera that obtains an image displayed on a display changes according to a target zoom magnification, in an electronic device according to an embodiment.

Referring to FIG. 4A, an electronic device (e.g., the electronic device 101 of FIG. 1 or the processor 120 of FIG. 1) may include a preview system 400 that displays images obtained from cameras 180-1, 180-2 (e.g., the camera module 180 of FIG. 1 or the camera module 180 of FIG. 2) on a display 160 (e.g., the display module 160 of FIG. 1).

According to an embodiment, the preview system 400 may include an image preprocessing operation 410, a spatial alignment transformation operation 420, an image disparity compensation operation 430, and an image post-processing operation 440. According to an embodiment, each operation may be performed by one chip through software, or at least one of each operation may be performed by a separate chip.

According to an embodiment, the image preprocessing operation 410 may include an operation for calculating a valid area in each camera 180-1, 180-2 and obtaining an image of the area, based on camera parameters 411 and other information. According to an embodiment, the camera parameters 411 may include at least one of FOV information, resolution information, or aspect ratio information of the cameras 180-1, 180-2. According to an embodiment, the other information may include display (e.g., the display module 160 of FIG. 1) information and/or currently requested zoom magnification information.

For example, through the image preprocessing operation 410, based on the camera parameters 411 of each camera 180-1, 180-2 and the currently requested zoom magnification information, the electronic device may obtain a first image of a valid area to be displayed on the display among images obtained from the first camera 180-1, and obtain a second image of a valid area to be displayed on the display among images obtained from the second camera 180-2. For example, when the first camera 180-1 (or the second camera 180-2) is a 12 mega pixel (MP) camera of 4000x3000 and 1.1x zoom magnification is requested, the electronic device may calculate the central 3636x2727 portion of the image obtained by the first camera 180-1 as the valid area and crop the area.

According to an embodiment, the spatial alignment transformation operation 420 may calculate an area where the FOVs of the images match, based on the images obtained through the image preprocessing operation 410 and metadata (e.g., app request, camera mode, sensor mode). According to an embodiment, the electronic device may calculate the area where the FOVs of the images match, through an image matching algorithm.

For example, through the spatial alignment transformation operation 420, the electronic device may calculate coordinates of a mutually corresponding area (e.g., an area including a same object) of the first image and the second image cropped in the image preprocessing operation 410.

According to an embodiment, through the spatial alignment transformation operation 420, the electronic device may select a reference image between the first image and the second image cropped in the image preprocessing operation 410, and calculate coordinates of an area of the remaining image where the FOV of the reference image and the FOV of the remaining image are matched as much as possible. According to an embodiment, the reference image may be an image with less change in the image even with a change in the current zoom magnification. For example, in a state where an image having a zoom magnification of 1x or more and less than 3x is obtained by the first camera 180-1, and an image having a zoom magnification of 3x or more and less than 10x is obtained by the second camera 180-2, when the zoom magnification change is 1x or more and less than 3x, the electronic device may select the image obtained by the second camera 180-2 as the reference image.

According to an embodiment, through the spatial alignment transformation operation 420, the electronic device may calculate the area where the FOVs of the first image and the second image match, and then determine a representative image to be displayed on the display. According to an embodiment, the electronic device may determine the representative image between the first image and the second image based on the currently requested zoom magnification. For example, when the currently requested zoom magnification is 1x or more and less than 3x, the electronic device may determine the first image as the representative image, and determine to display, on the display 160, an area of the first image where the FOV matches that of the second image.

According to an embodiment, the image disparity compensation operation 430 may include an operation of obtaining images of the area calculated in the spatial alignment transformation operation 420 such that the FOVs of the first image and the second image match as much as possible, and compensating for a remaining FOV difference and disparity between the images.

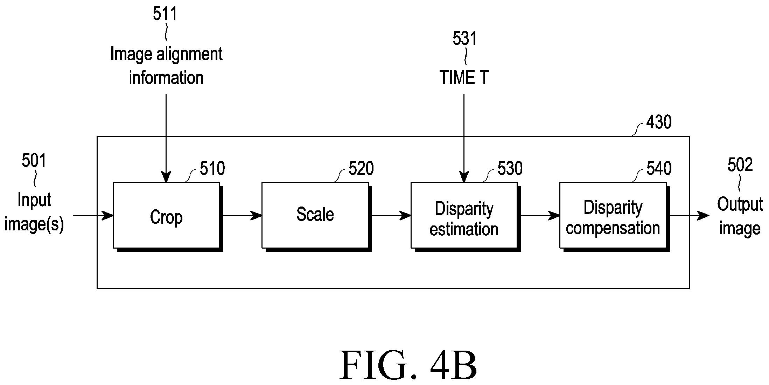

According to an embodiment, through the disparity compensation operation 430, the electronic device may align the FOVs of the two images by cropping the calculated area of the first image and the calculated area of the second image, align the sizes by scaling the cropped images, estimate the disparity between the scaled images, and generate an interpolation frame for compensating for the estimated disparity. According to an embodiment, the disparity compensation operation 430 will be described in more detail below with reference to FIG. 4B.

According to an embodiment, the image post-processing operation 440 may include an operation of adjusting the size of the interpolation images obtained through the image disparity compensation operation 430, or the calculated area within the representative image obtained through the spatial alignment transformation operation 420, based on the resolution of the display 160.

According to an embodiment, through the image post-processing operation 440, when the zoom magnification does not change, the electronic device may apply the transformation information obtained in the spatial alignment transformation operation 420 to the images obtained in the image preprocessing operation 410, respectively, to crop the images, and adjust the size of the representative image among the cropped images to fit the resolution of the display 160 and transmit it to the display 160. According to an embodiment, when the zoom magnification changes, the interpolation images obtained through the image disparity compensation operation 430 may be adjusted in size to fit the resolution of the display 160 and transmitted to the display 160.

According to an embodiment, the display 160 may display the images received from the preview system 400 as a preview screen.

FIG. 4B is a view illustrating an operation of generating an interpolation frame, in an electronic device according to an embodiment.

Referring to FIG. 4B, an electronic device (e.g., the electronic device 101 of FIG. 1 or the processor 120 of FIG. 1) may perform an image disparity compensation operation 430 for obtaining an interpolation image as an output image 438 using input images 431.

According to an embodiment, the image disparity compensation operation 430 may include a crop operation 432, a scale operation 433, a disparity estimation operation 434, and a disparity compensation operation 435.

According to an embodiment, the crop operation 432 may crop the input images 431 respectively, based on image alignment information 436 of the input images 431 (e.g., the first image and the second image) obtained through a spatial alignment transformation operation (e.g., the spatial alignment transformation operation 420 of FIG. 4A). For example, through the crop operation 432, the electronic device may include an operation of cropping a mutually corresponding area of the input images 431 calculated through the spatial alignment transformation operation. According to an embodiment, the electronic device may align the FOVs of the two images by cropping the mutually corresponding areas (e.g., an area including a same object) of the first image and the second image cropped through an image preprocessing operation (e.g., the image preprocessing operation 410 of FIG. 4A). According to an embodiment, the operation of cropping the mutually corresponding areas will be described in more detail below with reference to FIG. 6.

According to an embodiment, the scale operation 433 may include an operation of resizing cropped images of different sizes to a same size. According to an embodiment, the electronic device may align the sizes by resizing the images obtained by cropping the mutually corresponding areas between the input images 431 to the same size. According to an embodiment, the operation of scaling the images obtained by cropping the mutually corresponding areas to the same size will be described in more detail below with reference to FIG. 7.

According to an embodiment, the disparity estimation operation 434 may include an operation of estimating a disparity between the images with FOV and size aligned through the crop operation 432 and the scale operation 433. According to an embodiment, the electronic device may use an artificial intelligence model (or an artificial neural network) utilized for frame-rate conversion (FRC) for disparity estimation. According to an embodiment, disparity information obtained through the artificial intelligence model may include an optical flow and an occlusion mask. According to an embodiment, the optical flow may include disparity data related to a difference in position within an image of a same object respectively included in the two images. According to an embodiment, the occlusion mask may be related to a ratio at which the two images are to be respectively applied for each pixel of the interpolation frame.

According to an embodiment, the optical flow and the occlusion mask may be generated for each intermediate zoom magnification of a set number between the current zoom magnification and the target zoom magnification. According to an embodiment, the number of intermediate zoom magnifications may be determined based on the time required to change from the current zoom magnification to the target zoom magnification, and the plurality of intermediate zoom magnifications may respectively correspond to a plurality of interpolation frames.

According to an embodiment, the electronic device may estimate the disparity between the two images at the corresponding intermediate zoom magnification, based on time information (time T) 437 respectively related to the intermediate zoom magnifications. According to an embodiment, the time information (time T) 437 respectively related to the intermediate zoom magnifications may be determined according to a zoom curve determined based on a difference between the current zoom magnification and the target zoom magnification.

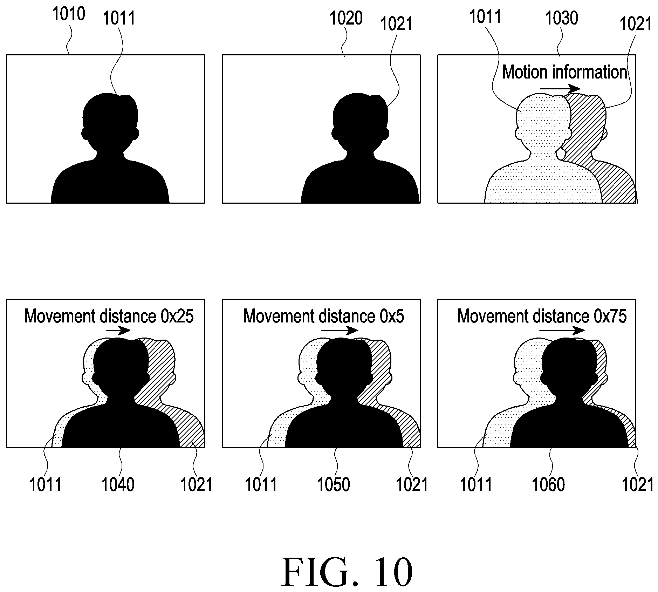

According to an embodiment, the disparity compensation operation 435 may include an operation of generating an interpolation frame to compensate for the disparity using the estimated disparity information. According to an embodiment, the electronic device may generate compensation frames of the set number respectively corresponding to the intermediate zoom magnifications of the set number in the disparity estimation operation 434. According to an embodiment, the operation of generating the compensation frames of the set number will be described in more detail below with reference to FIGS. 10, 11, and 12.

According to an embodiment, depending on a type of the artificial intelligence model, the electronic device may omit the disparity estimation operation 434 and generate the interpolation frame in which the disparity compensation has been performed.

FIG. 5A is a view illustrating a user input to change a zoom magnification of an electronic device according to an embodiment.

Referring to FIG. 5A, an electronic device (e.g., the electronic device 101 of FIG. 1 or the processor 120 of FIG. 1) may display a preview screen through an execution screen of a camera application. According to an embodiment, the preview screen may be at least a portion of a first image of a first zoom magnification obtained through a first camera (e.g., the camera module 180 of FIG. 1 or the camera module 180 of FIG. 2).

According to an embodiment, the electronic device may display, on a display (e.g., the display module 160 of FIG. 1), a plurality of icons (or buttons) 510 respectively corresponding to a plurality of zoom magnifications (e.g., 0.5x, 1x, 2x, 3x, 5x, 10x) for zoom magnification change by overlapping with at least a portion of the preview screen.

According to an embodiment, the electronic device may identify a zoom magnification corresponding to an icon selected from among the plurality of icons 510 as the target zoom magnification.

FIG. 5B is a view illustrating a user input to change a zoom magnification of an electronic device according to an embodiment.

Referring to FIG. 5B, the electronic device may display a slide bar 520 for zoom magnification change by overlapping with at least a portion of the preview screen. According to an embodiment, based on a user input 521 for selecting a specific position of the slide bar, the electronic device may identify a zoom magnification corresponding to the selected position as the target zoom magnification.

According to an embodiment, based on receiving a user input for selecting a specific position of the slide bar 520 and then dragging left or right, the electronic device may change the zoom magnification and identify the zoom magnification when the touch is released after the drag as the target zoom magnification.

FIG. 5C is a view illustrating a user input to change a zoom magnification of an electronic device according to an embodiment.

Referring to FIG. 5C, the electronic device may display a slide bar 520 for zoom magnification change by overlapping with at least a portion of the preview screen. According to an embodiment, the electronic device may change the zoom magnification selected on the slide bar 520 based on a distance between a start point and an end point of a pinch input 522.

According to an embodiment, the electronic device may change the zoom magnification selected on the slide bar 520 based on a speed of the pinch input.

According to an embodiment, the electronic device may identify the zoom magnification when the pinch input is released as the target zoom magnification.

FIG. 6 is a view illustrating an operation of cropping images respectively obtained from a plurality of cameras before generating an interpolation frame, in an electronic device according to an embodiment.

Referring to FIG. 6, an electronic device (e.g., the electronic device 101 of FIG. 1 or the processor 120 of FIG. 1) may obtain a first image 610 from a first camera (e.g., the camera module 180 of FIG. 1, the camera module 180 of FIG. 2, or the first camera 180-1 of FIG. 4A). According to an embodiment, the electronic device may obtain a second image 620 from a second camera (e.g., the camera module 180 of FIG. 1, the camera module 180 of FIG. 2, or the second camera 180-2 of FIG. 4A). According to an embodiment, the first image 610 may have a first FOV obtainable through the first camera, and the second image 620 may have a second FOV obtainable through the second camera. According to an embodiment, the second FOV may be different from the first FOV.

According to an embodiment, through an image preprocessing operation (e.g., the image preprocessing operation 410 of FIG. 4A), the electronic device may identify and/or crop a first valid area 611, which is an area of the first image 610 displayed on a display (e.g., the display module 160 of FIG. 1). According to an embodiment, through the image preprocessing operation, the electronic device may identify and/or crop a second valid area 621, which is an area of the second image 620 displayed on the display (e.g., the display module 160 of FIG. 1).

According to an embodiment, through a spatial alignment transformation operation (e.g., the spatial alignment transformation operation 420 of FIG. 4A), the electronic device may identify areas 612, 622 where the FOVs of the first valid area 611 and the second valid area 621 mutually match. According to an embodiment, the electronic device may calculate the areas 612, 622 where the FOVs of the first valid area 611 and the second valid area 621 match, through an image matching algorithm. According to an embodiment, the areas 612, 622 where the FOVs match may be areas including a same object within the first valid area 611 and the second valid area 621.

According to an embodiment, the electronic device may respectively crop the areas 612, 622 where the FOVs match, from the first valid area 611 and the second valid area 621. According to an embodiment, sizes of the area 612 cropped from the first valid area 611 and the area 622 cropped from the second valid area 621 may be different. According to an embodiment, as illustrated in FIG. 7 below, the electronic device may scale the sizes of the cropped areas 612, 622 having different sizes.

FIG. 7 is a view illustrating an operation of scaling the cropped images of FIG. 6 to a same size before generating an interpolation frame, in an electronic device according to an embodiment.

Referring to FIG. 7, an electronic device (e.g., the electronic device 101 of FIG. 1 or the processor 120 of FIG. 1) may scale (or resize) the cropped areas 612, 622 having different sizes illustrated in FIG. 6 to have the same size. According to an embodiment, the electronic device may resize the size of the area 612 cropped from the first valid area, based on the size of the area 622 cropped from the second valid area with less size change while changing from the current zoom magnification to the target zoom magnification, among the plurality of cropped areas 612, 622. According to an embodiment, the electronic device may obtain a first input image 710 and a second input image 720 having the same size through the scaling operation.

FIG. 8 is a view illustrating an operation of obtaining disparity data and ratio data based on the scaled images of FIG. 7 by using an artificial intelligence model, in an electronic device according to an embodiment.

Referring to FIG. 8, an electronic device (e.g., the electronic device 101 of FIG. 1 or the processor 120 of FIG. 1) may obtain disparity data 830, 831 and ratio data 832 by inputting the scaled input images 810, 811 of FIG. 7 into an artificial intelligence model 820. According to an embodiment, the artificial intelligence model 820 may include a CNN model or a vision transformer (VIT).

According to an embodiment, the first disparity data 830 may be per-pixel data of the first input image 810 with respect to the second input image 811, and the second disparity data 831 may be per-pixel data of the second input image 811 with respect to the first input image 810. According to an embodiment, the ratio data 832 may be related to a ratio at which a pixel value of the first input image 810 is to be applied and a ratio at which a pixel value of the second input image 811 is to be applied, for each pixel, when generating the interpolation frame.

As such, by estimating the disparity between the two input images 810, 811 through the artificial intelligence model, additional FOV alignment, which is insufficient even after performing the spatial alignment transformation operation (e.g., the spatial alignment transformation 420 of FIG. 4A), may be performed.

According to an embodiment, the two input images 810, 811 of FIG. 8 may be aligned in FOV and size through an algorithm. According to an embodiment, the electronic device may additionally use an artificial intelligence model to obtain the disparity data and the ratio data, by using, as input data, a valid area (e.g., the first valid area 611 of FIG. 6) of the first image obtained from the first camera and a valid area (e.g., the second valid area 621 of FIG. 6) of the second image obtained from the second camera before FOV and size alignment. According to an embodiment, an embodiment in which an artificial intelligence model for FOV and size alignment and an artificial intelligence model for obtaining the disparity data and the ratio data are configured in a joint form will be described in more detail below with reference to FIG. 9.

FIG. 9 is a view illustrating an operation of obtaining disparity data and ratio data using a plurality of artificial intelligence models configured in a joint form, in an electronic device according to an embodiment.

Referring to FIG. 9, an electronic device (e.g., the electronic device 101 of FIG. 1 or the processor 120 of FIG. 1) may obtain disparity data 930, 931 and ratio data 932 by inputting an image 910 of a valid area of a first image obtained from a first camera (e.g., the first valid area 611 of FIG. 6) and an image 911 of a valid area of a second image obtained from a second camera (e.g., the second valid area 621 of FIG. 6) into joint-type artificial intelligence models 920, 921. The joint-type artificial intelligence models 920, 921 may include a first artificial intelligence model 920 for aligning FOV and disparity between images, and a second artificial intelligence model 921 for estimating the disparity of the images with FOV and disparity aligned to obtain the disparity data 930, 931 and the ratio data 932 as output data, by using the image 910 of the valid area of the first image obtained from the first camera and the image 911 of the valid area of the second image obtained from the second camera as input data. According to an embodiment, the first artificial intelligence model 920 and/or the second artificial intelligence model 921 may include a CNN model or a vision transformer (VIT).

According to an embodiment, although the artificial intelligence models 920, 921 are illustrated as being in a joint form in FIG. 9, according to an embodiment, the electronic device may obtain images with FOV and disparity aligned as output data by using the image 910 of the valid area of the first image obtained from the first camera and the image 911 of the valid area of the second image obtained from the second camera as input data of the first artificial intelligence model 920, and obtain the disparity data 930, 931 and the ratio data 932 as output data by using the images with FOV and disparity aligned obtained as output data of the first artificial intelligence model 920 as input data of the second artificial intelligence model 921.

In an embodiment, the electronic device (e.g., the electronic device 101 of FIG. 1 or the processor 120 of FIG. 1) may execute a neural network model as the artificial intelligence models 920, 921. The neural network model may include a deep learning model for performing an operation of a specific purpose based on a result of learning training data. For example, the neural network model may include at least one of various types of neural network models, such as a Convolution Neural Network (CNN), a Region with Convolution Neural Network (R-CNN), a Region Proposal Network (RPN), a Recurrent Neural Network (RNN), a Stacking-based deep Neural Network (S-DNN), a State-Space Dynamic Neural Network (S-SDNN), a Deconvolution Network, a Deep Belief Network (DBN), a Restricted Boltzmann Machine (RBM), a Fully Convolutional Network, a Long Short-Term Memory (LSTM) Network, or a Classification Network.

FIG. 10 is a view illustrating an operation of generating an interpolation frame using disparity data, in an electronic device according to an embodiment.

Referring to FIG. 10, an electronic device (e.g., the electronic device 101 of FIG. 1 or the processor 120 of FIG. 1) may obtain a first input image 1010 and a second input image 1020. According to an embodiment, the first input image 1010 may be obtained from a first camera (e.g., the camera module 180 of FIG. 1, the camera module 180 of FIG. 2, or the first camera 180-1 of FIG. 4A), and the second input image 1020 may be obtained from a second camera (e.g., the camera module 180 of FIG. 1, the camera module 180 of FIG. 2, or the second camera 180-2 of FIG. 4A).

According to an embodiment, since the placement positions of the first camera and the second camera are different, a position of an object 1011 included in the first input image 1010 and a position of an object 1021 included in the second input image 1020 may be different.

According to an embodiment, the electronic device may identify the first input image 1010 as an n-th frame to be displayed on the display, and identify the second input image 1020 as an (n+1)-th frame to be displayed on the display. According to an embodiment, the electronic device may obtain disparity information 1030 (or motion information) based on a difference between the position of the object 1011 included in the first input image 1010 and the position of the object 1021 included in the second input image 1020.

According to an embodiment, the electronic device may compensate for the disparity by generating interpolation frames between the first input image 1010 and the second input image 1020. For example, the electronic device may generate continuous images by generating interpolation frames 1040, 1050, 1060 corresponding to times of n+0.25, n+0.50, and n+0.75 between the first input image 1010, which is the n-th frame, and the second input image 1020, which is the (n+1)-th frame.

According to an embodiment, the interpolation frame 1040 corresponding to the (n+0.25)-th time may include an object at a position moved by 0.25 times a moving distance from the position of the object 1011 included in the n-th frame to the position of the object 1021 included in the (n+1)-th frame. According to an embodiment, the interpolation frame 1050 corresponding to the (n+0.5)-th time may include an object at a position moved by 0.5 times a moving distance from the position of the object 1011 included in the n-th frame to the position of the object 1021 included in the (n+1)-th frame. According to an embodiment, the interpolation frame 1060 corresponding to the (n+0.75)-th time may include an object at a position moved by 0.75 times a moving distance from the position of the object 1011 included in the n-th frame to the position of the object 1021 included in the (n+1)-th frame.

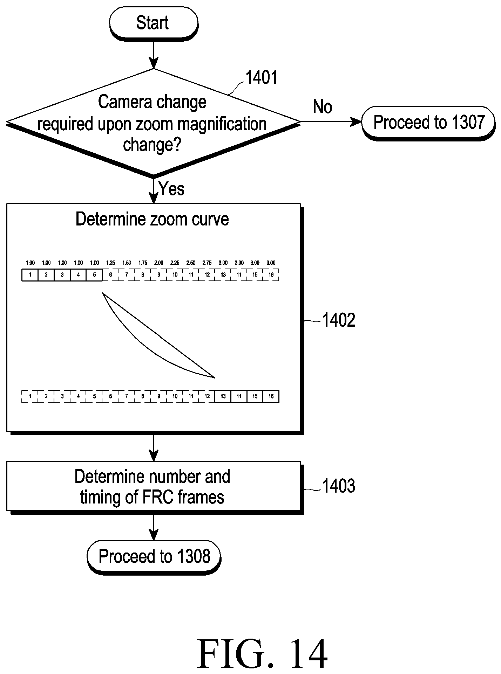

In FIG. 10, although the number of interpolation frames is three and the difference in time when the interpolation frames are generated (e.g., a difference of 0.25 each) is illustrated as being constant, this is not limited thereto, and the number of interpolation frames may be four or more, and the difference in time when the interpolation frames are generated may not be constant. For example, an operation of determining the number and timing of interpolation frames as illustrated in FIG. 14 below may be applied.

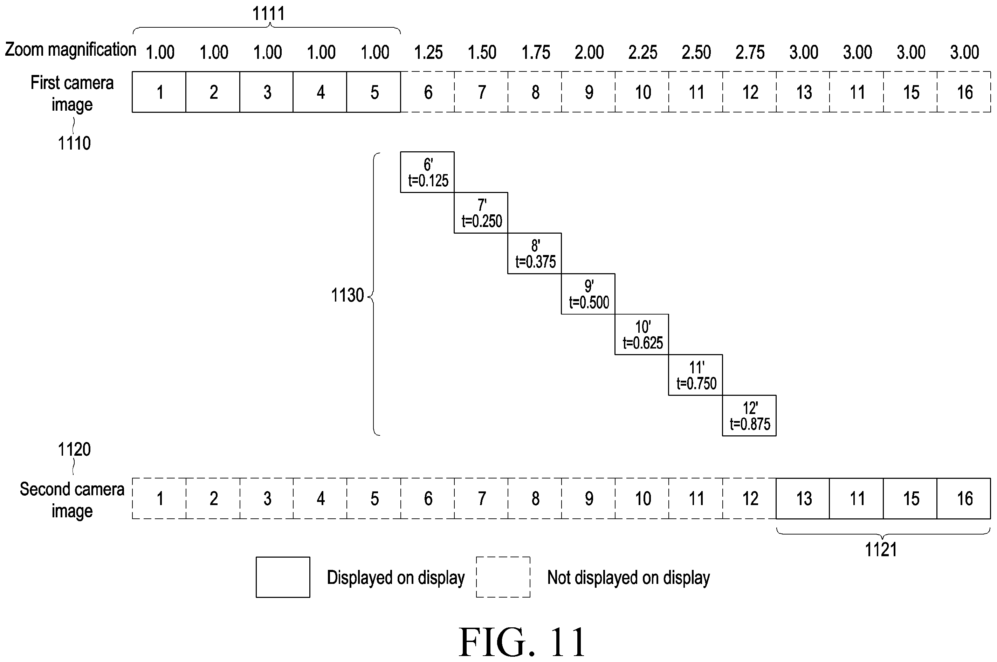

FIG. 11 is a view illustrating images displayed on a display, in an electronic device according to an embodiment.

Referring to FIG. 11, an electronic device (e.g., the electronic device 101 of FIG. 1 or the processor 120 of FIG. 1) may obtain first images 1110 through a first camera (e.g., the camera module 180 of FIG. 1, the camera module 180 of FIG. 2, or the first camera 180-1 of FIG. 4A) and obtain second images 1120 through a second camera (e.g., the camera module 180 of FIG. 1, the camera module 180 of FIG. 2, or the second camera 180-2 of FIG. 4A), at a same time.

According to an embodiment, at a current zoom magnification (e.g., 1x), the electronic device may display a portion 1111 of the first images 1110 on a display (e.g., the display module 160 of FIG. 1).

According to an embodiment, in a section where the zoom magnification is changing (e.g., 1x or more and less than 3x), the electronic device may display, on the display, interpolation frames 1130 generated based on the first images 1110 and the second images 1120. According to an embodiment, the electronic device may differently apply a disparity estimation time point of the interpolation frames 1130 in proportion to the changed zoom magnification.

For example, when displaying an interpolation frame corresponding to 1.25x zoom, the electronic device may estimate disparity information corresponding to time point 0.125 so that it is more similar to the No. 6 image among the first images 1110 among the No. 6 image among the first images 1110 and the No. 6 image among the second images 1120, and generate and display the No. 6' image as one of the interpolation frames 1130. According to an embodiment, when displaying an interpolation frame corresponding to 1.5x zoom, the electronic device may estimate disparity information corresponding to time point 0.25 so that it is more similar to the No. 7 image among the first images 1110 among the No. 7 image among the first images 1110 and the No. 7 image among the second images 1120, and generate and display the No. 7' image as one of the interpolation frames 1130. According to an embodiment, when displaying an interpolation frame corresponding to 2x zoom, the electronic device may estimate disparity information corresponding to time point 0.5 so that it is more similar to the No. 9 image among the first images 1110 among the No. 9 image among the first images 1110 and the No. 9 image among the second images 1120, and generate and display the No. 9' image as one of the interpolation frames 1130. In FIG. 11, although the number of interpolation frames 1130 is illustrated as being seven, this is not limited thereto, and may be six or less or eight or more.

According to an embodiment, when the current zoom magnification is the zoom magnification (e.g., 3x or more) of the second camera according to the zoom magnification change, the electronic device may display a portion 1121 of the second images 1120 on the display.

As such, upon the zoom magnification change, by displaying the interpolation frames 1130 instead of displaying an image corresponding to the zoom magnification among the first images 1110, a natural and smooth camera switching effect may be provided.

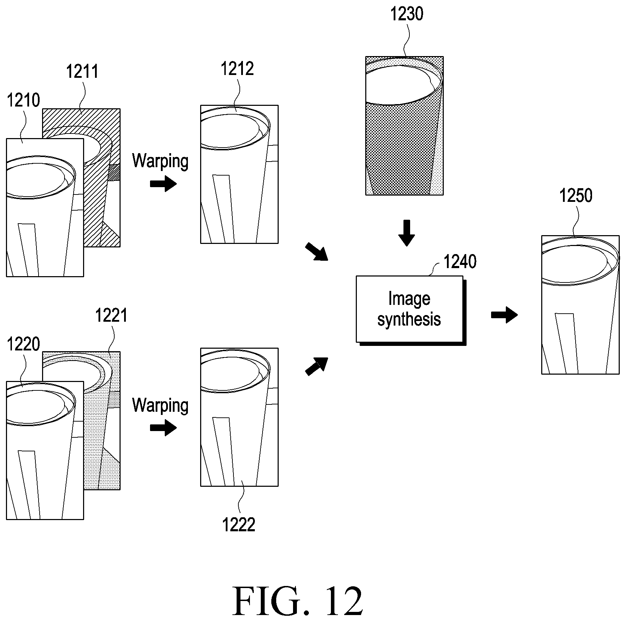

FIG. 12 is a view illustrating an operation of generating an interpolation frame using disparity data and ratio data, in an electronic device according to an embodiment.

Referring to FIG. 12, an electronic device (e.g., the electronic device 101 of FIG. 1 or the processor 120 of FIG. 1) may obtain an interpolation image 1250 by using input images 1210, 1220 with FOV and size aligned (e.g., the first input image 810 of FIG. 8 and the second input image 811 of FIG. 8), disparity data 1211, 1221 obtained through an artificial intelligence model (e.g., the first disparity data 820 of FIG. 8 and the second disparity data 821 of FIG. 8), and ratio data 1230. According to an embodiment, the disparity data 1211, 1221 and the ratio data 1230 may be disparity information corresponding to an intermediate zoom magnification at which the interpolation frame is generated.

According to an embodiment, the electronic device may obtain a first warped image 1212 by warping the first input image 1210 using the first disparity data 1211, and obtain a second warped image 1222 by warping the second input image 1220 using the second disparity data 1221.

According to an embodiment, the electronic device may generate the interpolation image 1250 by combining 1240 the first warped image 1212, the second warped image 1222, and the ratio data 1230. According to an embodiment, the ratio data 1230 may include data related to a ratio at which a pixel value of the first warped image 1212 is to be applied and a ratio at which a pixel value of the second warped image 1222 is to be applied, for each pixel, when generating the interpolation image 1250.

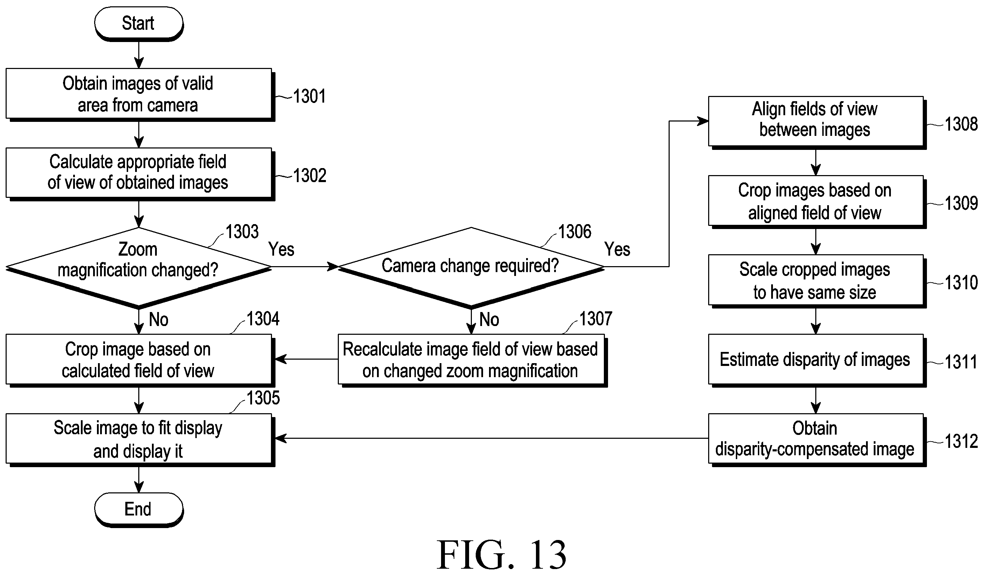

FIG. 13 is a flowchart describing an operation of displaying an interpolation frame according to a target zoom magnification, in an electronic device according to an embodiment.

Referring to FIG. 13, an electronic device (e.g., the electronic device 101 of FIG. 1 or the processor 120 of FIG. 1) may, in operation 1301, obtain images of a valid area from a camera. According to an embodiment, the operation of obtaining the images of the valid area is the same as the image preprocessing operation 410 of FIG. 4A, so a redundant description will be omitted. According to an embodiment, only one camera may be activated, and the electronic device may obtain an image of the valid area that can be displayed on the display among the images obtained from the activated camera.

According to an embodiment, in operation 1302, the electronic device may calculate an appropriate FOV of the obtained images. According to an embodiment, the electronic device may calculate a FOV to be displayed on the display among the obtained images based on the requested zoom magnification. For example, the electronic device may calculate a FOV to be displayed on the display among the images obtained through digital zoom based on the requested zoom magnification.

According to an embodiment, in operation 1303, the electronic device may identify whether the zoom magnification is changed. According to an embodiment, when a user input for selecting one of a plurality of buttons each related to a plurality of zoom magnifications, a user input for selecting or dragging a specific area of a slide bar for zoom magnification change, or a pinch input for zoom magnification change (e.g., a pinch-in input, a pinch-out input) is received, the electronic device may identify that the zoom magnification is changed.

According to an embodiment, when the zoom magnification is not changed (operation 1303-No), in operation 1304, the electronic device may crop the image based on the calculated FOV. According to an embodiment, when a user input for zoom magnification change (e.g., button selection, selecting or dragging a specific area of a slide bar, or a pinch input) is not received, the electronic device may identify that the zoom magnification is not changed. According to an embodiment, the electronic device may crop the image based on the FOV calculated based on the current zoom magnification.

According to an embodiment, in operation 1305, the electronic device may scale the image to fit the display and display it. According to an embodiment, the electronic device may adjust (e.g., scale) the size of the cropped image to fit the display and display it on the display.

According to an embodiment, when the zoom magnification is changed (operation 1303-Yes), in operation 1306, the electronic device may identify whether a camera change is required. According to an embodiment, when a user input for zoom magnification change (e.g., button selection, selecting or dragging a specific area of a slide bar, or a pinch input) is received, the electronic device may identify whether a camera change is required based on the target zoom magnification. For example, when a first camera (e.g., the camera module 180 of FIG. 1, the camera module 180 of FIG. 2, or the first camera 180-1 of FIG. 4A) obtains an image having a zoom magnification of 1x or more and less than 3x, and a second camera (e.g., the camera module 180 of FIG. 1, the camera module 180 of FIG. 2, or the second camera 180-2 of FIG. 4A) obtains an image having a zoom magnification of 3x or more and less than 10x, if the target zoom magnification is 3x or more in a state where a preview image with the current zoom magnification of 1x is displayed, the electronic device may identify that a camera change is required.

According to an embodiment, when the zoom magnification is changed in a state where only one camera is activated, or when it is identified that a camera change is required, the electronic device may additionally activate a camera adjacent to the activated camera (or a camera capable of obtaining an image of the target zoom magnification).

According to an embodiment, when it is identified that a camera change is unnecessary (operation 1306-No), in operation 1307, the electronic device may recalculate the image FOV based on the changed zoom magnification. For example, when the target zoom magnification is less than 3x based on a user input for zoom magnification change in a state where the current zoom magnification is 1x, the electronic device may identify that the camera change is unnecessary, and recalculate the FOV corresponding to the target zoom magnification among the images obtained by the first camera.

According to an embodiment, when it is identified that a camera change is required (operation 1306-Yes), in operation 1308, the electronic device may align the FOVs between the images. According to an embodiment, the operation of aligning the FOVs between the images is the same as the spatial alignment transformation operation 420 of FIG. 4A, so a redundant description will be omitted.

According to an embodiment, in operation 1309, the electronic device may crop the images based on the aligned FOV. According to an embodiment, the operation of cropping the images based on the aligned FOV is the same as the crop operation 432 of FIG. 4B, so a redundant description will be omitted.

According to an embodiment, in operation 1310, the electronic device may scale the cropped images to have the same size. According to an embodiment, the operation of scaling the cropped images is the same as the scale operation 433 of FIG. 4B, so a redundant description will be omitted.

According to an embodiment, in operation 1311, the electronic device may estimate the disparity of the images. According to an embodiment, the operation of estimating the disparity is the same as the disparity estimation operation 434 of FIG. 4B, so a redundant description will be omitted.

According to an embodiment, in operation 1312, the electronic device may obtain a disparity-compensated image. According to an embodiment, the operation of obtaining the disparity-compensated image is the same as the disparity compensation operation 435 of FIG. 4B, so a redundant description will be omitted.

According to an embodiment, after obtaining the interpolation frame, which is the disparity-compensated image, the electronic device may proceed to operation 1305 to scale the interpolation frame to fit the display and display it. For example, at least a part of the section where the zoom magnification is changed from the current zoom magnification to the target zoom magnification may display interpolation frames instead of digitally zooming and displaying the image obtained from the activated camera.

FIG. 14 is a flowchart describing an operation of determining a zoom curve according to a target zoom magnification, in an electronic device according to an embodiment.

Referring to FIG. 14, an electronic device (e.g., the electronic device 101 of FIG. 1 or the processor 120 of FIG. 1) may, in operation 1401, identify whether a camera change is required upon zoom magnification change. According to an embodiment, whether a camera change is required is the same as operation 1306 of FIG. 13, so a redundant description will be omitted.

According to an embodiment, when a camera change is not required upon zoom magnification change (operation 1401-No), the electronic device may proceed to operation 1307 of FIG. 13 to recalculate the FOV of the image based on the changed zoom magnification.

According to an embodiment, when a camera change is required upon zoom magnification change (operation 1401-Yes), the electronic device may determine a zoom curve in operation 1402. According to an embodiment, the zoom curve may be related to a timing (e.g., a disparity estimation time point or a synthesis timing) at which the intermediate zoom magnification between the current zoom magnification and the target zoom magnification is applied. For example, when the zoom curve is linear, a screen to which the intermediate zoom magnification is applied may be displayed at regular time intervals, so that the zoom change may appear to be performed at a constant speed. According to an embodiment, when the zoom curve is nonlinear, the zoom change may appear to be performed at a fast speed in a section where the slope of the zoom curve is large, and the zoom change may appear to be performed at a slow speed in a section where the slope of the zoom curve is small.

For example, when changing from a 1x zoom state to a 3x zoom state, the electronic device may have 7 steps of intermediate zoom magnifications between 1x and 3x. According to an embodiment, the number of interpolation frames may be seven, each corresponding to an intermediate zoom magnification.

According to an embodiment, the disparity estimation time point for each step may be performed linearly or nonlinearly as shown in [Table 1] below. [Table 1] may be an example in which the number of interpolation frames between the 1x camera and the 3x camera is determined to be seven, and the disparity estimation time point (synthesis timing) between the input images is determined linearly and nonlinearly for each intermediate zoom magnification.

**[Table 1]**

| | | | | | | | | | |
|---|---|---|---|---|---|---|---|---|---|
| Requested zoom magnification | 1.000 | 1.250 | 1.500 | 1.750 | 2.000 | 2.250 | 2.500 | 2.750 | 3.000 |
| Linear disparity estimation time point | - | 0.125 | 0.250 | 0.375 | 0.500 | 0.625 | 0.750 | 0.875 | - |
| Nonlinear disparity estimation time point | - | 0.313 | 0.528 | 0.675 | 0.777 | 0.847 | 0.895 | 0.928 | - |

According to an embodiment, the electronic device may identify one zoom curve among the plurality of zoom curves based on a difference between the current zoom magnification and the target zoom magnification. For example, when the difference between the current zoom magnification and the target zoom magnification is large, a nonlinear zoom curve including a section with a large slope may be selected. According to an embodiment, the electronic device may store zoom curves mapped by differences between the current zoom magnification and the target zoom magnification. According to an embodiment, the electronic device may select a zoom curve corresponding to the difference between the current zoom magnification and the target zoom magnification.

According to an embodiment, based on the identified zoom curve, the electronic device may determine respective disparity estimation time points to which the set number of intermediate zoom magnifications are applied. For example, when the zoom curve is linear, a difference between the disparities to which the intermediate zoom magnifications are applied may be a constant value. According to an embodiment, when the zoom curve is nonlinear, the difference between the disparities to which the intermediate zoom magnifications are applied may be large in a section where the slope of the zoom curve is large, and the difference between the disparities to which the intermediate zoom magnifications are applied may be small in a section where the slope of the zoom curve is small.

According to an embodiment, the electronic device may identify a zoom magnification corresponding to a distance between a start point and an end point of a pinch zoom input or a speed of the pinch zoom input as the target zoom magnification.

According to an embodiment, when the zoom magnification is changed through a pinch input, when the pinch input is received, two cameras close to the current zoom magnification are selected, and the optical zoom magnification of the two cameras and the requested zoom magnification may be linearly calculated as shown in [Equation 1] to select the estimation time point. [Equation 1] $Timing T = \frac{Request Zoom - Optical {Zoom}_{1}}{Optical {Zoom}_{2} - Optical {Zoom}_{1}}$
(where Optical Zoom₁ < Request Zoom < Optical Zoom₂₎)

For example, when a 1x zoom, 3x zoom, and 10x zoom camera are disposed in the electronic device, and 1.25x is requested through a pinch zoom input in a current 1x zoom state, the electronic device may select the 1x zoom camera and the 3x zoom camera, and calculate the disparity estimation time point of the images obtained by the 1x zoom camera and the 3x zoom camera as 0.125.

According to an embodiment, when the current zoom state is 3x and 5.1x is requested through a pinch zoom input, the electronic device may select the 3x zoom camera and the 10x zoom camera, and calculate the disparity estimation time point of the images obtained by the 3x zoom camera and the 10x zoom camera as 0.3.

According to an embodiment, when the target zoom magnification is determined based on the speed of the pinch zoom input, the electronic device may skip the 3x zoom and determine 7.3x zoom, which is close to the 10x zoom, as the target zoom magnification, based on the fast speed of the pinch zoom input in the current 1x zoom state. According to an embodiment, the electronic device may select the current 1x zoom camera and the 10x zoom camera close to the target zoom magnification, instead of selecting the two cameras close to the target zoom magnification, i.e., the 3x zoom camera and the 10x zoom camera. According to an embodiment, the electronic device may calculate the disparity estimation time point of the images obtained by the 1x zoom camera and the 10x zoom camera as 0.7.

According to an embodiment, in the case of zooming by a pinch input, the electronic device may determine the number of interpolation frames as one for each request received while the zoom is changing.

According to an embodiment, in operation 1403, the electronic device may determine the number and timing of FRC frames (or interpolation frames).

According to an embodiment, after determining the number and timing of interpolation frames, the electronic device may proceed to operation 1308 of FIG. 13 to align the FOVs between the images obtained by the plurality of cameras, respectively.

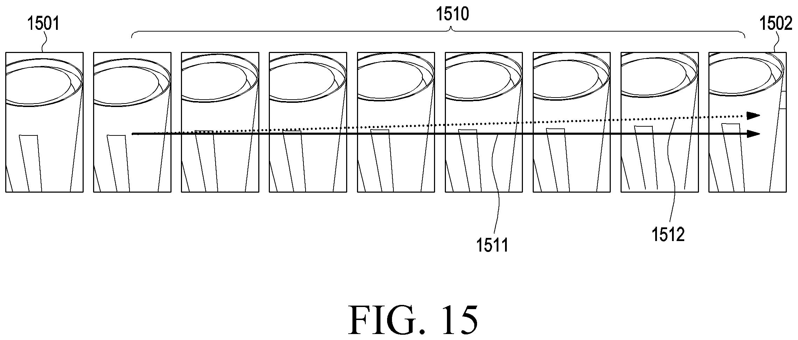

FIG. 15 is a view illustrating an operation of displaying interpolation frames with disparity compensated, in an electronic device according to an embodiment.

Referring to FIG. 15, an electronic device (e.g., the electronic device 101 of FIG. 1 or the processor 120 of FIG. 1) may display interpolation frames 1510 between a first image 1501 and a second image 1502 when switching from the first image 1501 obtained by a first camera (e.g., the camera module 180 of FIG. 1, the camera module 180 of FIG. 2, or the first camera 180-1 of FIG. 4A) to the second image 1502 obtained by a second camera (e.g., the camera module 180 of FIG. 1, the camera module 180 of FIG. 2, or the second camera 180-2 of FIG. 4A).

According to an embodiment, as corresponding positions 1512 included in each of the interpolation frames 1510 become closer from the first image 1501 to the second image 1502, they gradually move away from a parallel reference line 1511, thereby compensating for the disparity between the first image 1501 and the second image 1502.

As such, through disparity compensation upon camera switching, a phenomenon of image jumping or shaking that may occur due to switching disparity that may be generated as the camera is switched can be corrected to produce a smooth camera switching and zoom effect.

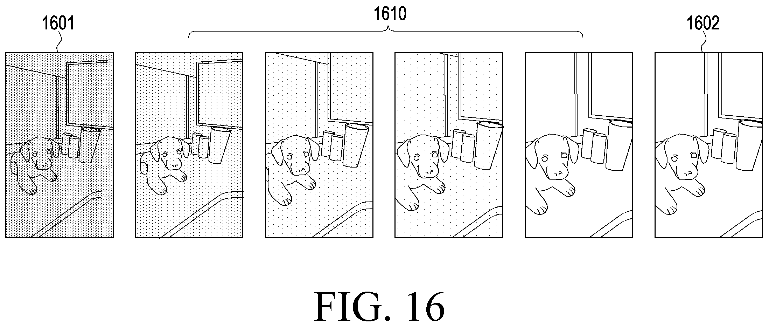

FIG. 16 is a view illustrating an operation of displaying an interpolation frame with exposure corrected, in an electronic device according to an embodiment.

Referring to FIG. 16, an electronic device (e.g., the electronic device 101 of FIG. 1 or the processor 120 of FIG. 1) may display interpolation frames 1610 between a first image 1601 and a second image 1602 when switching from the first image 1601 obtained by a first camera (e.g., the camera module 180 of FIG. 1, the camera module 180 of FIG. 2, or the first camera 180-1 of FIG. 4A) to the second image 1602 obtained by a second camera (e.g., the camera module 180 of FIG. 1, the camera module 180 of FIG. 2, or the second camera 180-2 of FIG. 4A).

According to an embodiment, when images are respectively obtained in a state where an exposure value (EV) of the first camera is set to -1 and an exposure value of the second camera is set to +1, matching performance between the two images may be degraded. When the image matching performance is degraded, information obtained in the spatial alignment transformation operation (e.g., the spatial alignment transformation operation 420 of FIG. 4A) is inaccurate, and thus a subject may jump or shake upon camera switching due to a zoom change. Even when alignment is successful, a brightness difference exists between the images obtained by the first camera and the images obtained by the second camera, and a sudden change in brightness may occur when the camera is switched.

According to an embodiment, as the interpolation frames 1610 are generated while adjusting the application ratio of the first image 1601 and the second image 1602, as it becomes closer from the first image 1601 to the second image 1602, the ratio at which the first image 1601 is applied decreases and the ratio at which the second image 1602 is applied increases, thereby compensating for the exposure difference between the first image 1601 and the second image 1602.

For example, when performing a zoom change from 0.6x to 1.0x using a first camera, which is a 0.6x zoom camera, and a second camera, which is a 1x zoom camera, the electronic device may display images obtained by the first camera from the first image 1601 to the fifth image, and display an image obtained by the second camera as the sixth image.

According to an embodiment, when the exposure value of the first camera is set to -1 and the exposure value of the second camera is set to +1, the electronic device may determine the disparity estimation time point in proportion to the zoom magnification, and generate the interpolation frames 1610 according to the composition ratio of the two images based on the disparity estimation time point, so that a gradual brightness change is made and a sudden exposure change is corrected.

According to an embodiment, when the focuses of the first camera and the second camera are different, and a camera change is required according to a zoom magnification change, the electronic device may determine the disparity estimation time point in proportion to the zoom magnification, and generate interpolation frames according to the composition ratio of the two images based on the disparity estimation time point, so that a gradual focus change is made and a sudden shaking of the subject is corrected even though the focus is changed according to the camera change.

According to an embodiment, even when a filter function (e.g., face masking or background effect) is applied through a third party (3^{rd} party) camera application, by generating the interpolation frame, the filter function may be applied even when the camera is changed according to the zoom magnification change.

An electronic device may obtain an image to which a wide range of zoom magnifications is applied using a plurality of cameras. In this case, a camera that obtains an image to be displayed on a display may be changed according to a zoom magnification desired by a user.

Even if a plurality of cameras simultaneously capture a same subject, since physical characteristics and placement positions of the cameras are different, images respectively obtained from the two cameras have different FOVs and disparity exists, and a discontinuity of a preview screen may be felt when the camera is switched. Accordingly, a technology for compensating for a sudden change upon camera switching may be required.

The technical problems to be achieved by the disclosure are not limited to the technical problems mentioned above, and other technical problems not mentioned may be clearly understood by those of ordinary skill in the art to which the disclosure pertains from the following description.

According to an embodiment, an electronic device may include a first camera, a second camera disposed around the first camera and having a field of view (FOV) different from a FOV of the first camera, a display, at least one processor including processing circuitry, and memory storing instructions.

According to an embodiment, the instructions, when executed by the at least one processor individually or collectively, may cause the electronic device to obtain a first image of a first zoom magnification through the first camera.

According to an embodiment, the instructions, when executed by the at least one processor individually or collectively, may cause the electronic device to display at least a portion of the first image on the display.

According to an embodiment, the instructions, when executed by the at least one processor individually or collectively, may cause the electronic device to identify a target zoom magnification based on a user input to change a zoom magnification.

According to an embodiment, the instructions, when executed by the at least one processor individually or collectively, may cause the electronic device to, based on the target zoom magnification being outside a set range, generate an interpolation frame based on the first image and at least a portion of a second image of a second zoom magnification obtained through the second camera.

According to an embodiment, the instructions, when executed by the at least one processor individually or collectively, may cause the electronic device to, during at least part of a time when the zoom magnification is changing, display the interpolation frame on the display in replacement of a partial area of the first image corresponding to the zoom magnification.

According to an embodiment, the memory may further store an artificial intelligence (AI) model.

According to an embodiment, the instructions, when executed by the at least one processor individually or collectively, may cause the electronic device to, based on the target zoom magnification being outside the set range, by inputting a first input image obtained based on the first image and a second input image obtained based on the second image, as input data, to the AI model, obtain first disparity data for each pixel of the first input image with respect to the second input image, second disparity data for each pixel of the second input image with respect to the first input image, and ratio data.

According to an embodiment, the ratio data may be related to a ratio at which a pixel value of the first input image is to be applied and a ratio at which a pixel value of the second input image is to be applied, for each pixel.

According to an embodiment, the instructions, when executed by the at least one processor individually or collectively, may cause the electronic device to generate the interpolation frame based on the first input image, the first disparity data, the second input image, the second disparity data, and the ratio data.

According to an embodiment, the artificial intelligence model may be trained to use a plurality of input images as input data and obtain, as output data, a plurality of disparity data with respect to each other of the plurality of input images and data related to a ratio at which pixels of each of the plurality of input images are to be applied.

According to an embodiment, the instructions, when executed by the at least one processor individually or collectively, may cause the electronic device to determine intermediate zoom magnifications of a set number between the first zoom magnification and the second zoom magnification.

According to an embodiment, the instructions, when executed by the at least one processor individually or collectively, may cause the electronic device to generate first input images of the set number and second input images of the set number.

According to an embodiment, the first input images may respectively correspond to the intermediate zoom magnifications of the set number, and the second input images may respectively correspond to the intermediate zoom magnifications of the set number.

According to an embodiment, the instructions, when executed by the at least one processor individually or collectively, may cause the electronic device to generate interpolation frames of the set number respectively corresponding to the intermediate zoom magnifications of the set number.

According to an embodiment, the memory may store a plurality of zoom curves.

According to an embodiment, the instructions, when executed by the at least one processor individually or collectively, may cause the electronic device to identify one zoom curve among the plurality of zoom curves based on a difference between the first zoom magnification and the target zoom magnification.

According to an embodiment, the instructions, when executed by the at least one processor individually or collectively, may cause the electronic device to determine respective disparities to which the set number of intermediate zoom magnifications are applied based on the identified zoom curve.

According to an embodiment, the instructions, when executed by the at least one processor individually or collectively, may cause the electronic device to display a partial area of the first image corresponding to a current zoom magnification, while changing from the first zoom magnification to a set zoom magnification between the first zoom magnification and the second zoom magnification.

According to an embodiment, the instructions, when executed by the at least one processor individually or collectively, may cause the electronic device to sequentially display the interpolation frames of the set number in replacement of a partial area of the first image while changing from the set zoom magnification to the second zoom magnification.

According to an embodiment, the instructions, when executed by the at least one processor individually or collectively, may cause the electronic device to, during the change from the first zoom magnification to the second zoom magnification, sequentially display the interpolation frames of the set number in replacement of at least a portion of the first image.

According to an embodiment, the first input image and the second input image may be obtained by cropping a first area of the first image that matches the second image and a second area of the second image that matches the first image, and resizing the first area and the second area such that a size of the first area and a size of the second area correspond to each other.

According to an embodiment, the memory may further store a second artificial intelligence model trained to use a plurality of images as input data and obtain, as output data, respective matched areas among the plurality of images, resized to have a same size.

According to an embodiment, the instructions, when executed by the at least one processor individually or collectively, may cause the electronic device to obtain, as output data, the first input image and the second input image, with the first image and the second image as input data, using the second artificial intelligence model.

According to an embodiment, the instructions, when executed by the at least one processor individually or collectively, may cause the electronic device to display a plurality of icons respectively corresponding to a plurality of zoom magnifications by overlapping with the at least a portion of the first image displayed on the display.

According to an embodiment, the instructions, when executed by the at least one processor individually or collectively, may cause the electronic device to, based on the user input to select one icon among the plurality of icons being received, identify a zoom magnification corresponding to the selected icon as the target zoom magnification.

According to an embodiment, the instructions, when executed by the at least one processor individually or collectively, may cause the electronic device to, based on the user input, which is a pinch input, being received, identify a zoom magnification corresponding to a distance between a start point and an end point of the pinch input as the target zoom magnification.

According to an embodiment, a method of controlling an electronic device may include obtaining a first image of a first zoom magnification through a first camera of the electronic device.

According to an embodiment, the method of controlling the electronic device may include displaying at least a portion of the first image on a display of the electronic device.

According to an embodiment, the method of controlling the electronic device may include identifying a target zoom magnification based on a user input to change a zoom magnification.

According to an embodiment, the method of controlling the electronic device may include, based on the target zoom magnification being outside a set range, generating an interpolation frame based on the first image and at least a portion of a second image of a second zoom magnification obtained through a second camera which is disposed around the first camera and has a field of view (FOV) different from a FOV of the first camera.

According to an embodiment, the method of controlling the electronic device may include, during at least part of a time when the zoom magnification is changing, displaying the interpolation frame on the display in replacement of a partial area of the first image corresponding to the zoom magnification.

According to an embodiment, the method of controlling the electronic device may further include, based on the target zoom magnification being outside the set range, by inputting a first input image obtained based on the first image and a second input image obtained based on the second image, as input data, to an artificial intelligence model stored in memory of the electronic device, obtaining first disparity data for each pixel of the first input image with respect to the second input image, second disparity data for each pixel of the second input image with respect to the first input image, and ratio data, as output data of the artificial intelligence model.

According to an embodiment, the ratio data may be related to a ratio at which a pixel value of the first input image is to be applied and a ratio at which a pixel value of the second input image is to be applied, for each pixel.

According to an embodiment, the artificial intelligence model may be trained to use a plurality of input images as input data and obtain, as output data, a plurality of disparity data with respect to each other of the plurality of input images and data related to a ratio at which pixels of each of the plurality of input images are to be applied.

According to an embodiment, the generating of the interpolation frame may include generating the interpolation frame based on the first input image, the first disparity data, the second input image, the second disparity data, and the ratio data.

According to an embodiment, the generating of the interpolation frame may include determining intermediate zoom magnifications of a set number between the first zoom magnification and the second zoom magnification.

According to an embodiment, the generating of the interpolation frame may include generating first input images of the set number and second input images of the set number.

According to an embodiment, the first input images may respectively correspond to the intermediate zoom magnifications of the set number, and the second input images may respectively correspond to the intermediate zoom magnifications of the set number.

According to an embodiment, the generating of the interpolation frame may include generating interpolation frames of the set number respectively corresponding to the intermediate zoom magnifications of the set number.

According to an embodiment, the memory of the electronic device may store a plurality of zoom curves.

According to an embodiment, the generating of the interpolation frame may include identifying one zoom curve among the plurality of zoom curves based on a difference between the first zoom magnification and the target zoom magnification.

According to an embodiment, the generating of the interpolation frame may include determining respective disparities to which the set number of intermediate zoom magnifications are applied based on the identified zoom curve.

According to an embodiment, the displaying of the interpolation frame on the display may include displaying a partial area of the first image corresponding to a current zoom magnification, while changing from the first zoom magnification to a set zoom magnification between the first zoom magnification and the second zoom magnification.

According to an embodiment, the displaying of the interpolation frame on the display may include sequentially displaying the interpolation frames of the set number in replacement of a partial area of the first image while changing from the set zoom magnification to the second zoom magnification.

According to an embodiment, the displaying of the interpolation frame on the display may include sequentially displaying the interpolation frames of the set number in replacement of at least a portion of the first image while changing from the first zoom magnification to the second zoom magnification.

According to an embodiment, the first input image and the second input image may be obtained by cropping a first area of the first image that matches the second image and a second area of the second image that matches the first image, and resizing the first area and the second area such that a size of the first area and a size of the second area correspond to each other.

According to an embodiment, the method of controlling the electronic device may further include displaying a plurality of icons respectively corresponding to a plurality of zoom magnifications by overlapping with the at least a portion of the first image displayed on the display.

According to an embodiment, the identifying of the target zoom magnification may include, based on the user input to select one icon among the plurality of icons being received, identifying a zoom magnification corresponding to the selected icon as the target zoom magnification.

According to an embodiment, the identifying of the target zoom magnification may include, based on the user input, which is a pinch input, being received, identifying a zoom magnification corresponding to a distance between a start point and an end point of the pinch input as the target zoom magnification.

According to an embodiment, in a non-transitory computer-readable recording medium storing one or more programs, the one or more programs may include instructions that cause an electronic device to obtain a first image of a first zoom magnification through a first camera of the electronic device.

According to an embodiment, the one or more programs may include instructions that cause the electronic device to display at least a portion of the first image on a display of the electronic device.

According to an embodiment, the one or more programs may include instructions that cause the electronic device to identify a target zoom magnification based on a user input to change a zoom magnification.

According to an embodiment, the one or more programs may include instructions that cause the electronic device to, based on the target zoom magnification being outside a set range, generate an interpolation frame based on the first image and at least a portion of a second image of a second zoom magnification obtained through a second camera which is disposed around the first camera and has a field of view (FOV) different from a FOV of the first camera.

According to an embodiment, the one or more programs may include instructions that cause the electronic device to, during at least part of a time when the zoom magnification is changing, display the interpolation frame on the display in replacement of a partial area of the first image corresponding to the zoom magnification.

According to an embodiment, the memory may further store an artificial intelligence model.

According to an embodiment, the one or more programs may include instructions that cause the electronic device to, based on the target zoom magnification being outside the set range, by inputting a first input image obtained based on the first image and a second input image obtained based on the second image, as input data, to the artificial intelligence model, obtain first disparity data for each pixel of the first input image with respect to the second input image, second disparity data for each pixel of the second input image with respect to the first input image, and ratio data, as output data of the artificial intelligence model.

According to an embodiment, the ratio data may be related to a ratio at which a pixel value of the first input image is to be applied and a ratio at which a pixel value of the second input image is to be applied, for each pixel.

According to an embodiment, the one or more programs may include instructions that cause the electronic device to generate the interpolation frame based on the first input image, the first disparity data, the second input image, the second disparity data, and the ratio data.

According to an embodiment, the artificial intelligence model may be trained to use a plurality of input images as input data and obtain, as output data, a plurality of disparity data with respect to each other of the plurality of input images and data related to a ratio at which pixels of each of the plurality of input images are to be applied.

According to an embodiment, the one or more programs may include instructions that cause the electronic device to determine intermediate zoom magnifications of a set number between the first zoom magnification and the second zoom magnification.

According to an embodiment, the one or more programs may include instructions that cause the electronic device to generate first input images of the set number and second input images of the set number.

According to an embodiment, the first input images may respectively correspond to the intermediate zoom magnifications of the set number, and the second input images may respectively correspond to the intermediate zoom magnifications of the set number.

According to an embodiment, the one or more programs may include instructions that cause the electronic device to generate interpolation frames of the set number respectively corresponding to the intermediate zoom magnifications of the set number.

According to an embodiment, the memory may store a plurality of zoom curves.

According to an embodiment, the one or more programs may include instructions that cause the electronic device to identify one zoom curve among the plurality of zoom curves based on a difference between the first zoom magnification and the target zoom magnification.

According to an embodiment, the one or more programs may include instructions that cause the electronic device to determine respective disparities to which the set number of intermediate zoom magnifications are applied based on the identified zoom curve.

According to an embodiment, the one or more programs may include instructions that cause the electronic device to display a partial area of the first image corresponding to a current zoom magnification, while changing from the first zoom magnification to a set zoom magnification between the first zoom magnification and the second zoom magnification.

According to an embodiment, the one or more programs may include instructions that cause the electronic device to sequentially display the interpolation frames of the set number in replacement of a partial area of the first image while changing from the set zoom magnification to the second zoom magnification.

According to an embodiment, the one or more programs may include instructions that cause the electronic device to sequentially display the interpolation frames of the set number in replacement of at least a portion of the first image while changing from the first zoom magnification to the second zoom magnification.

According to an embodiment, the first input image and the second input image may be obtained by cropping a first area of the first image that matches the second image and a second area of the second image that matches the first image, and resizing the first area and the second area such that a size of the first area and a size of the second area correspond to each other.

According to an embodiment, the memory may include instructions further storing a second artificial intelligence model trained to use a plurality of images as input data and obtain, as output data, respective matched areas among the plurality of images, resized to have a same size.

According to an embodiment, the one or more programs may include instructions that cause the electronic device to obtain, as output data, the first input image and the second input image, with the first image and the second image as input data, using the second artificial intelligence model.

According to an embodiment, the one or more programs may include instructions that cause the electronic device to display a plurality of icons respectively corresponding to a plurality of zoom magnifications by overlapping with the at least a portion of the first image displayed on the display.

According to an embodiment, the one or more programs may include instructions that cause the electronic device to, based on the user input to select one icon among the plurality of icons being received, identify a zoom magnification corresponding to the selected icon as the target zoom magnification.

According to an embodiment, the one or more programs may include instructions that cause the electronic device to, based on the user input, which is a pinch input, being received, identify a zoom magnification corresponding to a distance between a start point and an end point of the pinch input as the target zoom magnification.

The effects obtainable from the present disclosure are not limited to the effects mentioned above, and other effects not mentioned will be clearly understood by those skilled in the art to which the present disclosure pertains.

The electronic device according to an embodiment disclosed in the present document may be one of various types of devices. The electronic device may include, e.g., a portable communication device (e.g., a smart phone), a computer device, a portable multimedia device, a portable medical device, a camera, a wearable device, or a home appliance device. The electronic device according to embodiments of the present document is not limited to the aforementioned devices.

An embodiment of the present document and the terms used herein are not intended to limit the technical features described in the present document to specific embodiments, and should be understood to include various changes, equivalents, or replacements of the corresponding embodiments. In connection with the description of the drawings, similar reference numerals may be used for similar or related components. The singular form of a noun corresponding to an item may include one or more of the items, unless the relevant context clearly indicates otherwise. In the present document, each of the phrases such as "A or B," "at least one of A and B," "at least one of A or B," "A, B or C," "at least one of A, B and C," and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order). When a (e.g., first) component is referred to as being "coupled" or "connected" to another (e.g., second) component, with or without the term "functionally" or "communicatively," it means that the certain component may be connected to the other component directly (e.g., by wire), wirelessly, or through a third component.

The term "module" used in an embodiment of the present document may include a unit implemented in hardware, software, or firmware, and may be used interchangeably with terms such as logic, logic block, component, or circuit. A module may be an integrally configured component or a minimum unit or a part thereof of the component performing one or more functions. For example, according to an embodiment, the module may be implemented in the form of an application-specific integrated circuit (ASIC).

An embodiment of the present document may be implemented as software (e.g., the program 140) including one or more instructions stored in a storage medium (e.g., the internal memory 136 or the external memory 138) readable by a machine (e.g., the electronic device 101). For example, a processor (e.g., the processor 120) of the machine (e.g., the electronic device 101) may invoke at least one of the one or more instructions stored from the storage medium and execute it. This makes it possible for the machine to be operated to perform at least one function according to the at least one invoked instruction. The one or more instructions may include code generated by a compiler or code that may be executed by an interpreter. The machine-readable storage medium may be provided in the form of a non-transitory storage medium. Here, "non-transitory" merely means that the storage medium is a tangible device and does not include a signal (e.g., an electromagnetic wave), and this term does not distinguish between a case where data is stored semi-permanently in the storage medium and a case where data is temporarily stored.

According to an embodiment, the method according to an embodiment disclosed in the present document may be provided by being included in a computer program product. The computer program product may be traded as a commodity between a seller and a buyer. The computer program product may be distributed in the form of a machine-readable storage medium (e.g., a compact disc read only memory (CD-ROM)), or distributed (e.g., downloaded or uploaded) online through an application store (e.g., Play Store^{TM}) or directly between two user devices (e.g., smart phones). In the case of online distribution, at least a part of the computer program product may be at least temporarily stored or temporarily generated in a machine-readable storage medium such as memory of a manufacturer's server, a server of an application store, or a relay server.

According to an embodiment, each component (e.g., a module or a program) of the aforementioned components may include a single entity or a plurality of entities, and some of the plurality of entities may be separately disposed in another component. According to an embodiment, one or more of the aforementioned components or operations may be omitted, or one or more other components or operations may be added. Alternatively or additionally, a plurality of components (e.g., modules or programs) may be integrated into one component. In this case, the integrated component may perform one or more functions of each component of the plurality of components in the same or similar manner as performed by a corresponding component among the plurality of components prior to the integration. According to an embodiment, operations performed by a module, a program, or another component may be executed sequentially, in parallel, repeatedly, or heuristically, or one or more of the operations may be executed in a different order or omitted, or one or more other operations may be added.

## Claims

1. An electronic device, comprising:
a first camera;
a second camera disposed around the first camera and having a field of view (FOV) different from a FOV of the first camera;
a display;
at least one processor including processing circuitry; and
memory storing instructions,
wherein the instructions, when executed by the at least one processor individually or collectively, cause the electronic device to:
obtain a first image of a first zoom magnification through the first camera,
display at least a portion of the first image on the display,
identify a target zoom magnification based on a user input to change a zoom magnification,
based on the target zoom magnification being outside a set range, generate an interpolation frame based on the first image and at least a portion of a second image of a second zoom magnification obtained through the second camera, and
during at least part of a time when the zoom magnification is changing, display the interpolation frame on the display in replacement of a partial area of the first image corresponding to the zoom magnification.

2. The electronic device of claim 1,
wherein the memory further stores an artificial intelligence (AI) model,
wherein the instructions, when executed by the at least one processor individually or collectively, cause the electronic device to:
based on the target zoom magnification being outside the set range, by inputting a first input image obtained based on the first image and a second input image obtained based on the second image, as input data, to the AI model, obtain first disparity data for each pixel of the first input image with respect to the second input image, second disparity data for each pixel of the second input image with respect to the first input image, and ratio data, wherein the ratio data is related to a ratio at which a pixel value of the first input image is to be applied and a ratio at which a pixel value of the second input image is to be applied, for each pixel, and
generate the interpolation frame based on the first input image, the first disparity data, the second input image, the second disparity data, and the ratio data,
wherein the artificial intelligence model is trained to use a plurality of input images as input data and obtain, as output data, a plurality of disparity data with respect to each other of the plurality of input images and data related to a ratio at which pixels of each of the plurality of input images are to be applied.

3. The electronic device of claim 2, wherein the instructions, when executed by the at least one processor individually or collectively, cause the electronic device to:
determine intermediate zoom magnifications of a set number between the first zoom magnification and the second zoom magnification,
generate first input images of the set number and second input images of the set number, the first input images respectively corresponding to the intermediate zoom magnifications of the set number, and the second input images respectively corresponding to the intermediate zoom magnifications of the set number, and
generate interpolation frames of the set number respectively corresponding to the intermediate zoom magnifications of the set number.

4. The electronic device of claim 3,
wherein the memory stores a plurality of zoom curves,
wherein the instructions, when executed by the at least one processor individually or collectively, cause the electronic device to:
identify one zoom curve among the plurality of zoom curves based on a difference between the first zoom magnification and the target zoom magnification, and
determine respective disparities to which the set number of intermediate zoom magnifications are applied based on the identified zoom curve.

5. The electronic device of claim 3,
wherein the instructions, when executed by the at least one processor individually or collectively, cause the electronic device to:
display a partial area of the first image corresponding to a current zoom magnification, while changing from the first zoom magnification to a set zoom magnification between the first zoom magnification and the second zoom magnification, and
sequentially display the interpolation frames of the set number in replacement of a partial area of the first image while changing from the set zoom magnification to the second zoom magnification.

6. The electronic device of claim 3, wherein the instructions, when executed by the at least one processor individually or collectively, cause the electronic device to:
sequentially display the interpolation frames of the set number in replacement of at least a portion of the first image while changing from the first zoom magnification to the second zoom magnification.

7. The electronic device of claim 2,
wherein the first input image and the second input image are obtained by cropping a first area that matches the second image in the first image and a second area that matches the first image in the second image, and resizing the first area and the second area so that a size of the first area corresponds to a size of the second area.

8. The electronic device of claim 2,
wherein the memory further stores a second artificial intelligence model trained to use a plurality of images as input data and obtain, as output data, respective matched areas among the plurality of images, resized to have a same size,
wherein the instructions, when executed by the at least one processor individually or collectively, cause the electronic device to:
obtain, using the second artificial intelligence model, the first input image and the second input image as output data by using the first image and the second image as input data.

9. The electronic device of claim 1,
wherein the instructions, when executed by the at least one processor individually or collectively, cause the electronic device to:
display a plurality of icons respectively corresponding to a plurality of zoom magnifications by overlapping the at least a portion of the first image displayed on the display, and
based on receiving the user input for selecting one of the plurality of icons, identify a zoom magnification corresponding to the selected icon as the target zoom magnification.

10. The electronic device of claim 1,
wherein the instructions, when executed by the at least one processor individually or collectively, cause the electronic device to:
based on receiving the user input, which is a pinch input, identify a zoom magnification corresponding to a distance between a start point and an end point of the pinch input as the target zoom magnification.

11. A method of controlling an electronic device, the method comprising:
obtaining a first image of a first zoom magnification through a first camera of the electronic device;
displaying at least a portion of the first image on a display of the electronic device;
identifying a target zoom magnification based on a user input to change a zoom magnification;
based on the target zoom magnification being outside a set range, generating an interpolation frame based on the first image and at least a portion of a second image of a second zoom magnification obtained through a second camera which is disposed around the first camera and has a field of view (FOV) different from a FOV of the first camera; and
during at least part of a time when the zoom magnification is changing, displaying the interpolation frame on the display in replacement of a partial area of the first image corresponding to the zoom magnification.

12. The method of claim 11, further comprising:
based on the target zoom magnification being outside the set range, by inputting a first input image obtained based on the first image and a second input image obtained based on the second image, as input data, to an artificial intelligence model stored in memory of the electronic device, obtaining first disparity data for each pixel of the first input image with respect to the second input image, second disparity data for each pixel of the second input image with respect to the first input image, and ratio data, as output data of the artificial intelligence model,
wherein the ratio data is related to a ratio at which a pixel value of the first input image is to be applied and a ratio at which a pixel value of the second input image is to be applied, for each pixel,
wherein the artificial intelligence model is trained to use a plurality of input images as input data and obtain, as output data, a plurality of disparity data with respect to each other of the plurality of input images and data related to a ratio at which pixels of each of the plurality of input images are to be applied, and
wherein the generating of the interpolation frame comprises generating the interpolation frame based on the first input image, the first disparity data, the second input image, the second disparity data, and the ratio data.

13. The method of claim 12,
wherein the generating of the interpolation frame comprises:
determining intermediate zoom magnifications of a set number between the first zoom magnification and the second zoom magnification;
generating first input images of the set number and second input images of the set number, wherein the first input images respectively correspond to the intermediate zoom magnifications of the set number, and the second input images respectively correspond to the intermediate zoom magnifications of the set number; and
generating interpolation frames of the set number respectively corresponding to the intermediate zoom magnifications of the set number.

14. The method of claim 13,
wherein the memory of the electronic device stores a plurality of zoom curves, and
wherein the generating of the interpolation frame comprises:
identifying one zoom curve among the plurality of zoom curves based on a difference between the first zoom magnification and the target zoom magnification; and
determining respective disparities to which the set number of intermediate zoom magnifications are applied based on the identified zoom curve.

15. A non-transitory computer-readable recording medium storing one or more programs, wherein the one or more programs comprise instructions that cause an electronic device to:
obtain a first image of a first zoom magnification through a first camera of the electronic device,
display at least a portion of the first image on a display of the electronic device,
identify a target zoom magnification based on a user input to change a zoom magnification,
based on the target zoom magnification being outside a set range, generate an interpolation frame based on the first image and at least a portion of a second image of a second zoom magnification obtained through a second camera which is disposed around the first camera and has a field of view (FOV) different from a FOV of the first camera, and
during at least part of a time when the zoom magnification is changing, display the interpolation frame on the display in replacement of a partial area of the first image corresponding to the zoom magnification.
